# EUROPEAN PATENT SPECIFICATION

(11) **EP 4 578 689 B1**
(45) Date of publication and mention of the grant of the patent: **09.09.2026**
(21) Application number: 23872667.3
(22) Date of filing: 07.03.2023
(51) Int. Cl.: B60K 35/00, G02B 5/09, H04N 9/31, B60K 37/20, B60K 35/23, B60K 35/22, G02B 27/01, H04N 5/74, G02B 5/10

(54) **PERSONALIZED INFOTAINMENT DEVICE FOR VEHICLE**
PERSONALISIERTE INFOTAINMENT-VORRICHTUNG FÜR EIN FAHRZEUG
DISPOSITIF D'INFODIVERTISSEMENT PERSONNALISÉ POUR VÉHICULE

(30) Priority: 26.09.2022 KR 20220121819
(43) Date of publication of application: 02.07.2025
(60) Divisional application: 26188125.4
(73) Proprietor: LG Electronics Inc., Yeongdeungpo-gu Seoul 07336 (KR)
(72) Inventor: KWEON, Ohjin, Seoul 06772 (KR)
(74) Representative: Vossius & Partner Patentanwälte Rechtsanwälte mbB
(86) International application number: PCT/KR2023/003081
(87) International publication number: WO 2024/071536

(56) References cited:
- EP-A1- 2 728 395
- DE-A1- 102021 001 309
- ES-A2- 2 406 205
- JP-A- 2003 175 744
- JP-A- 2003 186 110
- JP-A- 2005 082 103
- JP-A- 2005 205 974
- JP-A- 2009 196 473
- JP-A- 2009 196 473
- US-A1- 2021 260 998
- US-B2- 7 203 005
- US-B2- 7 990 620

## Description

### Technical Field

This specification relates to a vehicle imaging device. One particular embodiment relates to a personalized infotainment device for a vehicle.

### Background Art

A vehicle is an apparatus capable of being moved in a desired direction by a user who is on board. A representative example of a vehicle may be an automobile.

For convenience of a user using a vehicle, various types of sensors and electronic devices are arranged in the vehicle. In particular, for the convenience of the user's driving, research on an advanced driver assistance system (ADAS) is being actively carried out. In addition, an autonomous vehicle is actively under development.

In some embodiments, a vehicle display that shows various driving information of the vehicle is located below a driver's forward visual field for driving, which affects driving safety, a phenomenon known as rubbernecking. Therefore, a vehicle imaging device, such as a head-up display (HUD), may be mounted on a vehicle to enhance driving safety by projecting an image on a windshield at the front of the vehicle, positioned close to the driver's line of sight while driving.

An infotainment device also needs to be installed in a passenger or rear seat of the vehicle to provide personal information and personal entertainment content. Therefore, there is a need for a vehicle imaging device that is capable of displaying driving-related information in a front region of a driver's seat of the vehicle or providing personal entertainment content in a front region of a passenger or rear seat of the vehicle.

Unlike the rear seats, the passenger seat does not have a personal entertainment display. There is no adequate space in the passenger seat to mount a display. Additionally, there are restrictions on images displayed on an entertainment device not to be within the driver's field of view due to the driver's driving stability, and there are also some related laws and regulations.

Therefore, there is a need to propose a technology that may appropriately arrange a large-screen infotainment imaging device to offer personal entertainment and various types of information even to the passenger seat, ensuring that only a passenger in the passenger seat can view such information. Accordingly, it is expected that the passenger in the passenger seat is able to enjoy a variety of information and entertainment in the vehicle through a new, previously non-existent large-screen vehicle imaging device.

US 7 990 620 B2 discloses a vehicle imaging device comprising a picture generation unit and a screen panel configured to reflect light.

### Disclosure of Invention

### Technical Problem

An aspect of the specification is to provide a personalized infotainment device for a vehicle.

Another aspect of this specification is to provide an imaging device capable of implementing a personal infotainment display without causing space issues in a vehicle's passenger seat and compromising driver safety.

Still another aspect of this specification is to provide an implementation method for appropriately arranging a large-screen infotainment imaging device to offer personal entertainment and various types of information even to a passenger seat, ensuring that only a passenger in the passenger seat can view such information.

Still another aspect of this specification is to provide a personalized infotainment device for a vehicle that is compact in volume and configured to be invisible from a driver's seat.

The tasks to be solved in the disclosure may not be limited to the aforementioned, and other problems to be solved by the disclosure will be obviously understood by a person skilled in the art based on the following description.

### Solution to Problem

A vehicle imaging device according to the invention is defined in independent claim 1. In order to achieve the above aspects and other advantages according to the claimed invention, there is provided a vehicle imaging device including a cover forming an exterior of a dashboard of a vehicle and arranged on a passenger seat of the vehicle; a picture generation unit (PGU) arranged inside the dashboard and configured to generate light upward or to one side; a mirror arranged between the PGU and the cover and configured to reflect the light generated upward or to the one side; and a screen panel arranged between the PGU and the mirror, and configured to reflect light reflected by the mirror so that an image by the reflected light passes through the cover.

The image by the light reflected from the screen panel is displayed in a specific region of a windshield of a driver's seat of the vehicle so that a width of the image in one axial direction is larger than a length in another axial direction.

In an embodiment, the PGU may be arranged spaced apart from one end of the screen panel, and the one end may be formed at a distance closer to the passenger seat than another end of the screen panel. The light reflected from the mirror and the light reflected from the screen panel may be reflected at different reflection angles in different regions of the windshield, to form the image in a field of view of a passenger seated in the passenger seat. The different regions of the windshield may include a region from a first point adjacent to the one end to a second point adjacent to the another end. A vertical distance between the cover and the screen panel may be formed to be shorter at the another end than at the one end.

In an embodiment, the PGU may be arranged spaced apart from another end of the screen panel, and the another end may be formed at a distance farther from the passenger seat than one end of the screen panel. The light reflected from the mirror and the light reflected from the screen panel may be reflected at different reflection angles in different regions of the windshield, to form the image in a field of view of a passenger seated in the passenger seat. The different regions of the windshield may include a region from a first point adjacent to the one end to a second point adjacent to the another end. A vertical distance between the cover and the screen panel may be formed to be farther from the another end than from the one end.

In an embodiment, the vehicle imaging device may further include a second mirror arranged in one side region above the screen panel. The PGU may be arranged in one side region below the screen panel. The second mirror may be arranged at a distance farther from an end of the screen panel than the mirror. The light output from the PGU may be reflected from the mirror and the second mirror, and may be reflected again from the screen panel to be incident onto the specific region of the windshield, so that the image is displayed in the specific region.

In an embodiment, one surface of the mirror adjacent to the one end of the screen panel onto which the light generated in the PGU is incident may be formed in a curved shape. The mirror formed in the curved shape may be arranged to be tilted at a certain angle toward the screen panel based on a vertical axis. The screen panel may be formed in a tilted structure in which the one end is arranged at a lower point on the vertical axis than the another end.

In an embodiment, one surface of the mirror adjacent to the one end of the screen panel onto which the light generated in the PGU is incident may be formed in a plane shape. The mirror formed in the plane shape may be arranged to be tilted at a certain angle toward the screen panel based on a vertical axis. The one end of the screen panel may be formed at a same point on the vertical axis as the another end.

In an embodiment, one surface of the mirror adjacent to the another end of the screen panel onto which the light generated in the PGU is incident may be formed in a plane shape. The mirror formed in the plane shape may be arranged to be tilted at a certain angle toward the screen panel based on a vertical axis. The screen panel may be formed in a tilted structure in which the one end is arranged at an upper point on the vertical axis than the another end.

In an embodiment, the cover may include an opaque region formed in one region or another region corresponding to a region where the PGU and the mirror are arranged; and a transparent region formed corresponding to a region where the screen panel is arranged. The opaque region may be formed to surround the transparent region. The image formed by reflection from the screen panel may pass through the transparent region of the cover to be displayed in the specific region of the windshield located on the passenger seat.

In an embodiment, the screen panel may be formed inside the dashboard to have a first width in one axial direction and a first length in another axial direction. A ratio of the first width and the first length may be set to a first ratio. A ratio of a width and a length of the image displayed on the windshield may be set to a second ratio. A top of the image displayed on the windshield located on the passenger seat may be positioned lower than a center line of the windshield. The first and second ratios may be set to be at least 5:1.

In an embodiment, the screen panel may include a reflective layer having patterns to reflect light generated in the PGU, the patterns having a cross-section that is linear or parabolic and a front surface that is elliptical; and a diffusion layer arranged on one surface of the reflective layer and configured to diffuse the light reflected from the reflective layer in a certain angular range based on a direction perpendicular to the cover.

In an embodiment, the patterns may be arranged such that a length in one axial direction of the patterns of the reflective layer decreases as a vertical distance from the screen panel to the cover decreases.

In an embodiment, the reflective layer may include first patterns each having a cross-section formed in a linear or parabolic shape with a first slope angle and a front surface formed in an elliptical shape, and configured to reflect the light; and second patterns arranged between the first patterns and having a second slope angle greater than the first slope angle. A length of the first patterns of the reflective layer in one side region where the PGU is arranged may be formed longer than a length of the first patterns of the reflective layer in another side region.

In an embodiment, the PGU may include at least one lens configured to output light of a specific color; a dichroic mirror configured to transmit or reflect light output from the lens; an inner mirror configured to reflect the light output from the at least one lens; a display panel; a prism arranged between the display panel and the inner mirror and configured to refract and output the light reflected from the inner mirror and the display panel: and a projection lens including a plurality of lenses arranged spaced apart from the prism to one side.

In an embodiment, the at least one lens may include a first lens that outputs red light, a second lens that outputs green light, and a third lens that outputs blue light. The dichroic mirror may include a first dichroic mirror configured to transmit the red light and reflect the blue light; and a second dichroic mirror configured to transmit the green light and reflect the red light and the blue light.

In an embodiment, the PGU may further include a first relay lens arranged between the second dichroic mirror and the inner mirror; and a second relay lens arranged between the inner mirror and the prism. The red light, the blue light, and the green light reflected from or transmitted through the second dichroic mirror may pass through the first relay lens and may be reflected from the inner mirror. The red light, the blue light, and the green light reflected from the inner mirror may pass through the second relay lens, the prism, and the projection lens.

In an embodiment, the vehicle imaging device may further include a drive control unit configured to control movement of the PGU, the mirror, and the screen panel. The drive control unit may be operatively coupled with the PGU, and may control a first motor such that the projection lens in the PGU moves in a vertical axis direction. A display position of the image displayed in the specific region may be adjusted in the another axial direction as the projection lens moves in the vertical axis direction.

In an embodiment, the drive control unit may be operatively coupled with the mirror and may control a second motor such that the mirror is tilted in a horizontal axis direction. The display position of the image displayed in the specific region may be adjusted in the another axial direction as the mirror is tilted in the horizontal axis direction.

In an embodiment, the drive control unit may be operatively coupled with the screen panel and may control a third motor such that the screen panel is tilted in a central axis direction. The display position of the image displayed in the specific region may be adjusted in the another axial direction as the screen panel is tilted in the central axis direction.

In an embodiment, the light reflected through the reflective layer of the screen panel may be formed inside a region of a field of view of a user seated in the passenger seat and outside a field of view of a driver seated in a driver seat such that the image is displayed in the specific region of the windshield of the passenger seat.

In an embodiment, the reflective layer of the screen panel may be configured to reflect sunlight. The sunlight reflected from the reflective layer, in case that the sunlight is incident at a first angle, may be incident at the first angle with respect to a horizontal axis and reflected from a first point of the windshield. The sunlight reflected from the reflective layer, in case that the sunlight is incident at a second angle greater than the first angle, may be incident at the second angle with respect to the horizontal axis at a second point of the windshield, and may pass through the windshield or may be reflected at the second point to proceed into a region between the driver seat and the passenger seat.

Details of other embodiments are included in the detailed description and drawings.

### Advantageous Effects of Invention

The technical features of a personalized infotainment device for a vehicle according to the specification may be summarized as follows.

According to this specification, a large-screen infotainment image may be implemented on a windshield of a passenger seat of a vehicle through an embedded structure other than a protruding structure, thereby providing a large-screen imaging device for the passenger seat.

According to this specification, a virtual optical system may be used to eliminate elements that may interfere with driving and to implement an image that is viewable only by a passenger in a passenger seat, thereby enhancing safe driving of a driver.

According to this specification, a personalized infotainment display which is thin and small may be implemented in a limited space inside a vehicle by using an ultra-short throw (UST) projector and a special screen.

According to this specification, a personalized infotainment device for a vehicle may be provided by utilizing a glove box, which are arranged inside a dashboard on a passenger seat of the vehicle, while avoiding an airbag, air conditioning components, and the like.

The effects of the disclosure are not limited to those effects mentioned above, and other effects not mentioned may be clearly understood by those skilled in the art from the description of the appended claims.

### Brief Description of Drawings

FIG. 1 is a view illustrating appearance of a vehicle according to an embodiment.
FIG. 2 is a diagram illustrating the appearance of the vehicle at various angles.
FIGS. 3 and 4 are diagrams illustrating an inside of a vehicle according to an embodiment.
FIG. 5 is a block diagram illustrating a vehicle according to an embodiment.
FIG. 6A is a view of a configuration in which a screen of a certain ratio is formed in a specific region of front glass of a vehicle.
FIG. 6B is a view of a structure in which a vehicle imaging device for creating the screen of the certain ratio of FIG. 6A is arranged inside a dashboard of the vehicle.
FIGS. 7A and 7B are views of a structure in which a picture generation unit and internal components of the vehicle imaging device of FIG. 6B are arranged inside a cover.
FIG. 8A is a view of a structure in which the picture generation unit is arranged in a front region of a screen panel in the vehicle imaging device of FIG. 7A.
FIG. 8B is a view of a structure in which the picture generation unit is arranged in a front region of a screen panel in the vehicle imaging device of FIG. 7A.
FIG. 9 is a view of a structure of a vehicle imaging device in which a picture generation unit is arranged horizontally on one side of a screen panel.
FIG. 10A is a view of a structure in which a screen panel of a vehicle imaging device according to this specification includes a plurality of layers.
FIG. 10B is a view of a fresnel structure of a reflective layer of a screen panel according to the specification.
FIG. 11 is a view of a detailed structure of a picture generation unit of a vehicle imaging device according to the specification.
FIGS. 12A and 12B are views of a titable structure of a picture generation unit, and a structure in which a screen display region, in which an image is displayed on a windshield of a vehicle, changes according to the titable structure.
FIGS. 13A and 13B are views of a titable structure of a mirror, and a structure in which a screen display region, in which an image is displayed on a windshield of a vehicle, changes according to the mirror.
FIGS. 14A and 14B are views of a titable structure of a screen panel, and a structure in which a screen display region, in which an image is displayed on a windshield of a vehicle, changes according to the screen panel.
FIG. 15A is a view of a structure in which light forming an image and sunlight are reflected from a screen panel and formed into a user's field of view.
FIG. 15B is a view of a region in which reflected sunlight is formed depending on an incident angle of the sun.
FIG. 15C is a view of a region in which light forming an image is generated in a vehicle imaging device according to the specification.

### Mode for the Invention

Description will now be given in detail according to exemplary implementations disclosed herein, with reference to the accompanying drawings. For the sake of brief description with reference to the drawings, the same or equivalent components may be given the same or similar reference numbers, and description thereof will not be repeated. The terms "module" and "unit" as used herein interchangeably or individually used to refer to a constituent element only for convenience in description in the present specification and therefore are not themselves intended to take on different meanings or to depict different functions. In describing the embodiments disclosed herein, moreover, a detailed description of a related well-known technology will be omitted when it is determined that it would obscure the gist of the present disclosure. Furthermore, the accompanying drawings are provided only for a better understanding of the embodiments disclosed herein, and are not intended to limit the technical ideas disclosed herein. Therefore, it should be understood that the accompanying drawings include all modifications, equivalents, and substitutions within the scope of the disclosure.

The terms including an ordinal number such as first, second, and the like may be used to describe various elements, but the elements should not be limited by those terms. The terms are used merely for the purpose of distinguishing one element from another.

It will be understood that when an element is referred to as being "connected with" another element, the element may be connected with the another element or intervening elements may also be present. In contrast, when a component is referred to as being "directly connected to" or "directly coupled to" another component, it should be understood that there are no intervening components present.

As used herein, the singular form is intended to include the plural forms as well, unless context clearly indicates otherwise.

In the present application, it should be further understood that the terms "comprises," "includes," etc. specify the presence of stated features, integers, steps, operations, elements, components, or combinations thereof, but do not preclude the presence or addition of one or more other features, integers, steps, operations, elements, components, or combinations thereof.

A vehicle according to an embodiment of the disclosure may be understood as a conception including automobiles, motorcycles, and the like. Hereinafter, the vehicle will be described based on a car.

The vehicle according to the embodiment of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

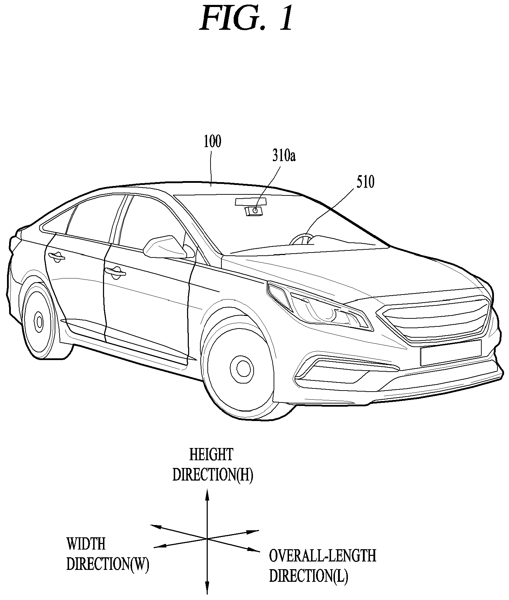

FIG. 1 is a view illustrating appearance of a vehicle according to an embodiment.

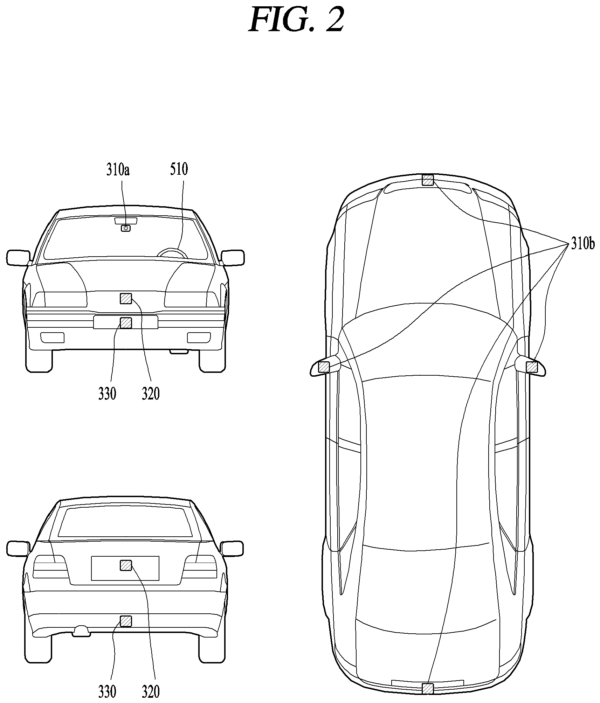

FIG. 2 is a diagram illustrating the appearance of the vehicle at various angles.

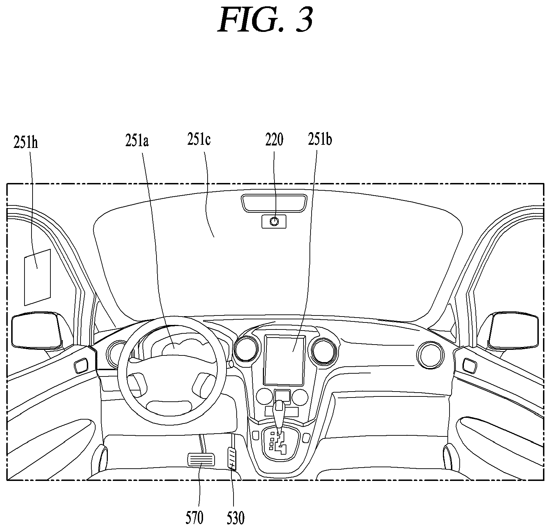

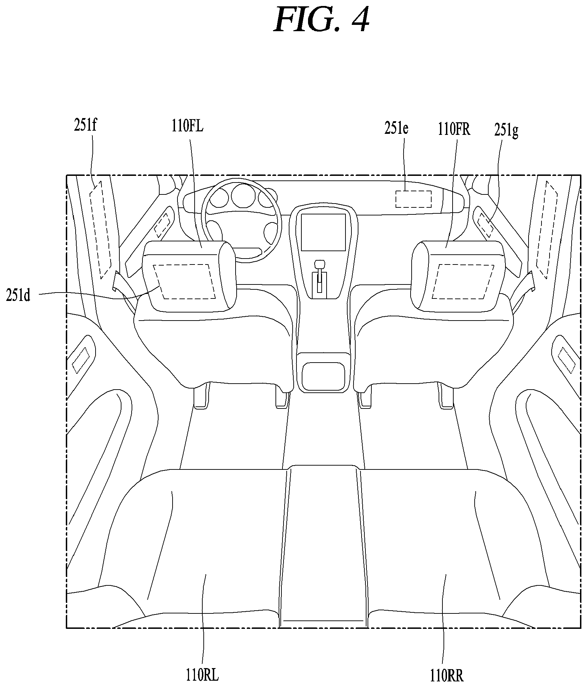

FIGS. 3 and 4 are diagrams illustrating an inside of a vehicle according to an embodiment.

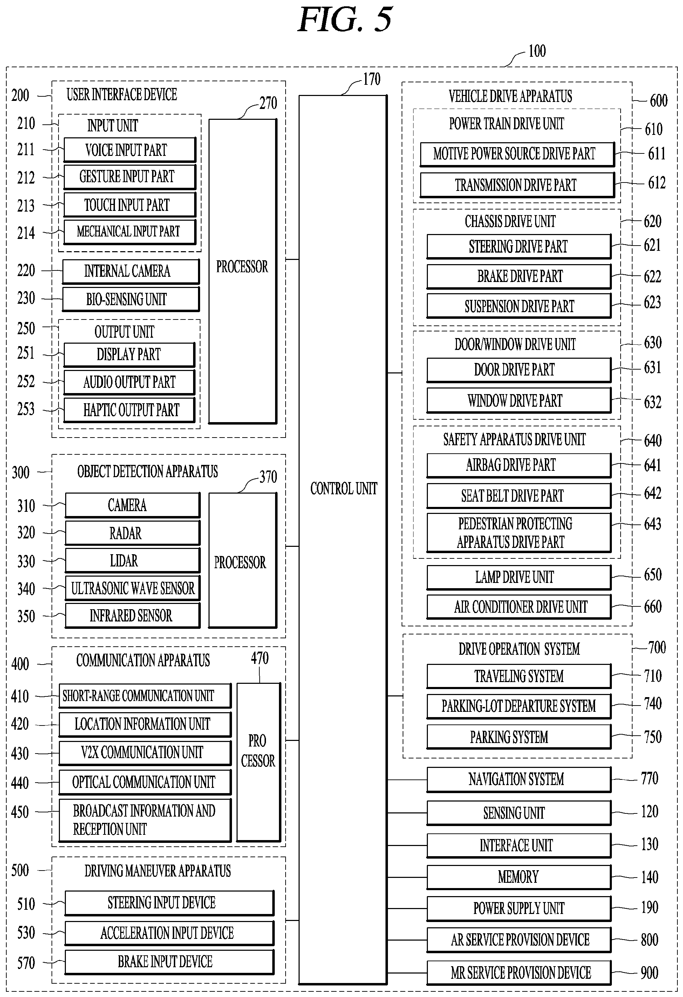

FIG. 5 is a block diagram illustrating a vehicle according to an embodiment.

As illustrated in FIGS. 1 to 5, a vehicle 100 may include wheels rotating by a power source, and a steering input apparatus 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle 100 may be converted from the manual mode into the autonomous mode or from the autonomous mode into the manual mode based on a user input received through a user interface device 200.

The vehicle 100 may be switched into the autonomous mode or the manual mode based on traveling situation information. The driving environment information may be generated based on object information provided from an object detection device 300.

For example, the vehicle 100 may be switched from the manual mode into the autonomous mode or from the autonomous module into the manual mode based on driving environment information generated in the object detection device 300.

In an example, the vehicle 100 may be switched from the manual mode into the autonomous mode or from the autonomous mode into the manual mode based on driving environment information received through a communication device 400.

The vehicle 100 may be switched from the manual mode into the autonomous mode or from the autonomous module into the manual mode based on information, data or signal provided from an external device.

When the vehicle 100 is driven in the autonomous mode, the vehicle 100 may be driven based on a driving system 700.

For example, the autonomous vehicle 100 may be driven based on information, data, or signals that are generated by a traveling system 710, a parking-lot departure system 740, and a parking system 750.

When the vehicle 100 is driven in the manual mode, the autonomous vehicle 100 may receive a user input for driving through a driving operation device 500. The vehicle 100 may be driven based on the user input received through the driving operation device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 5, the vehicle 100 may include a user interface device 200, an object detection device 300, a communication device 400, a driving operation device 500, a vehicle drive device 600, a driving system 700, a navigation system 770, a sensing unit 120, an interface unit 130, a memory 140, a controller 170, and a power supply unit 190.

According to embodiments, the vehicle 100 may include more components in addition to components to be explained in this specification or may not include some of those components to be explained in this specification.

The user interface device 200 is a device for communication between the vehicle 100 and a user. The user interface device 200 may receive a user input and provide information generated in the vehicle 100 to the user. The vehicle 100 may implement user interfaces (Uls) or user experiences (UXs) through the user interface device 200.

The user interface device 200 may include an input unit 210, an internal camera 220, a biometric sensing unit 230, an output unit 250 and a processor 270.

According to embodiments, the user interface device 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be disposed inside the vehicle. For example, the input unit 200 may be disposed on one region of a steering wheel, one region of an instrument panel, one region of a seat, one region of each pillar, one region of a door, one region of a center console, one region of a headlining, one region of a sun visor, one region of a windshield, one region of a window, or the like.

The input unit 200 may include a voice input part 211, a gesture input part 212, a touch input part 213, and a mechanical input part 214.

The audio input part 211 may convert a user's voice input into an electric signal. The converted electric signal may be provided to the processor 270 or the controller 170.

The audio input part 211 may include at least one microphone.

The gesture input part 212 may convert a user's gesture input into an electric signal. The converted electric signal may be provided to the processor 270 or the controller 170.

The gesture input part 212 may include at least one of an infrared sensor and an image sensor for detecting the user's gesture input.

According to embodiments, the gesture input part 212 may detect a user's three-dimensional (3D) gesture input. To this end, the gesture input part 212 may include a light emitting diode emitting a plurality of infrared rays, or a plurality of image sensors.

The gesture input part 212 may detect the user's 3D gesture input by a time of flight (TOF) method, a structured light method or a disparity method.

The touch input part 213 may convert the user's touch input into an electric signal. The converted electric signal may be provided to the processor 270 or the controller 170

The touch input part 213 may include a touch sensor for detecting the user's touch input.

According to an embodiment, the touch input part 213 may be integrated with the display 251 so as to implement a touch screen. The touch screen may provide an input interface and an output interface between the vehicle 100 and the user.

The mechanical input part 214 may include at least one of a button, a dome switch, a jog wheel, and a jog switch. An electric signal generated by the mechanical input part 214 may be provided to the processor 270 or the controller 170.

The mechanical input part 214 may be arranged on a steering wheel, a center fascia, a center console, a cockpit module, a door, and the like.

The internal camera 220 may acquire an image of the interior of the vehicle. The processor 270 may detect a user's status from the image of the interior of the vehicle. The processor 270 may acquire information related to the user's gaze from the image of the interior of the vehicle. The processor 270 may detect the user's gesture from the image of the interior of the vehicle.

The biometric sensing unit 230 may acquire the user's biometric information. The biometric sensing unit 230 may include a sensor for detecting the user's biometric information and acquire fingerprint information and heart rate information regarding the user using the sensor. The biometric information may be used for user authentication.

The output unit 250 may generate an output related to a visual, auditory or tactile signal.

The output unit 250 may include at least one of a display 251, an audio output part 252, and a haptic output part 253.

The display 251 may output graphic objects corresponding to various types of information.

The display 251 may include at least one of a liquid crystal display (LCD), a thin film transistor-LCD (TFT LCD), an organic light-emitting diode (OLED), a flexible display, a three-dimensional (3D) display and an e-ink display.

The display 251 may be inter-layered or integrated with a touch input part 213 to implement a touch screen.

The display 251 may be implemented as a head up display (HUD), a center information display (CID), a cluster, and/or a rear seat entertainment (RSE). When the display 251 is implemented as the HUD, the display 251 may be provided with a projection module and thus output information through an image which is projected onto a windshield or a window.

The display 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent organic light-emitting diode (OLED), a transparent liquid crystal display (LCD), a transmissive transparent display, or a transparent LED display. The transparent display may have adjustable transparency.

In some examples, the user interface device 200 may include a plurality of displays 251a to 251g.

The display 251 may be disposed on one region of the steering wheel, one region 251a, 251b, 251e of the instrument panel, one region 251d of the seat, one region 251f of each pillar, one region 251g of the door, one region of the center console, one region of the headlining, or one region of the sun visor, or implemented on one region 251c of the windshield or one region 251h of the window.

Driving-related information for a driver may be displayed in one region 251a, 251b of the instrument panel. A personal infotainment display may be implemented in one region 251e of the instrument panel by a vehicle imaging device for a passenger seated in a front passenger seat. A personal infotainment display may be implemented in one region 251d of the seat by a vehicle imaging device for rear seat entertainment (RSE).

The audio output part 252 may convert an electric signal provided by the processor 270 or the controller 170 into an audio signal and output the audio signal. To this end, the audio output part 252 may include at least one speaker.

The haptic output part 253 may generate a tactile output. For example, the haptic output part 253 may vibrate the steering wheel, a safety belt, a seat 110FL, 110FR, 110RL, 110RR such that the user can recognize such output.

The processor 270 may control an overall operation of each unit of the user interface device 200.

According to an embodiment, the user interface device 200 may include a plurality of processors 270 or may not include any processor 270.

When the processor 270 is not included in the user interface device 200, the user interface device 200 may operate according to a control of a processor of another device within the vehicle 100 or the controller 170.

In some embodiments, the user interface device 200 may be named a display device for vehicle.

The user interface device 200 may operate under the control of the controller 170.

The object detection device 300 is a device for detecting an object located outside the vehicle 100.

Examples of the object may include a variety of objects associated with driving (operation) of the vehicle 100.

Hereinafter, a vehicle imaging device according to the specification, particularly, a personalized infotainment device for a vehicle, will be described. In some embodiments, a vehicle display that shows various driving information related to a vehicle may be located below a driver's forward visual field for driving, which affects driving safety (rubbernecking). Therefore, a vehicle imaging device, such as a head-up display (HUD), may be mounted on a vehicle to enhance driving safety by projecting an image on a windshield at the front of the vehicle, positioned close to the driver's line of sight while driving.

An infotainment device also needs to be installed in a passenger or rear seat of the vehicle to provide personal information and personal entertainment content. Therefore, there is a need for a vehicle imaging device that is capable of displaying driving-related information in a front region of a driver's seat of the vehicle or providing personal entertainment content in a front region of a passenger or rear seat of the vehicle.

Unlike the rear seats, the passenger seat does not have a personal entertainment display. There is no adequate space in the passenger seat to mount a display. Additionally, there are restrictions on images displayed on an entertainment device not to be within the driver's field of view due to the driver's driving stability, and there are also some related laws and regulations.

Therefore, there is a need to propose a technology that may appropriately arrange a large-screen infotainment imaging device to offer personal entertainment and various types of information even to the passenger seat, ensuring that only a passenger in the passenger seat can view such information. Accordingly, it is expected that the passenger in the passenger seat is able to enjoy a variety of information and entertainment in the vehicle through a new, previously non-existent large-screen vehicle imaging device.

In this regard, the specification is to provide a personalized infotainment device for a vehicle. This specification is also to provide an imaging device capable of implementing a personal infotainment display without causing space issues in a passenger seat of a vehicle and compromising driver safety. This specification is to provide an implementation method for appropriately arranging a large-screen infotainment imaging device to offer personal entertainment and various types of information even to a passenger seat, ensuring that only a passenger in the passenger seat can view such information.

The specification is also to provide a personalized infotainment device for a vehicle that is compact in volume and configured to be invisible from a driver's seat. The tasks to be solved in the disclosure may not be limited to the aforementioned, and other problems to be solved by the disclosure will be obviously understood by a person skilled in the art based on the following description.

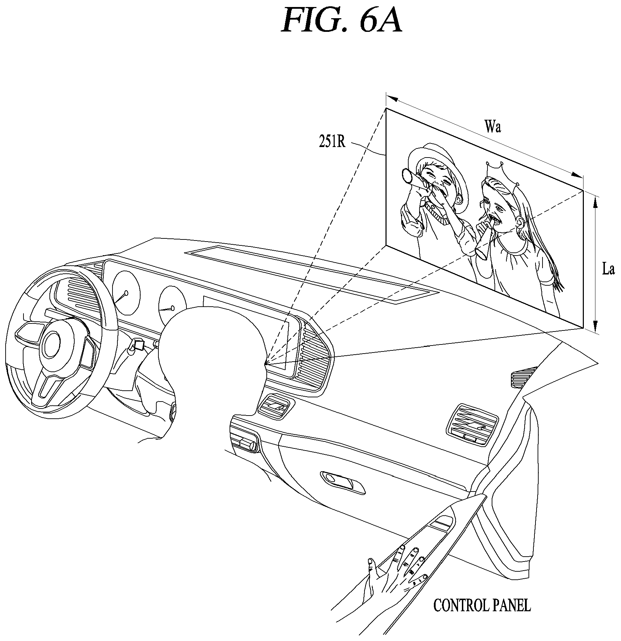

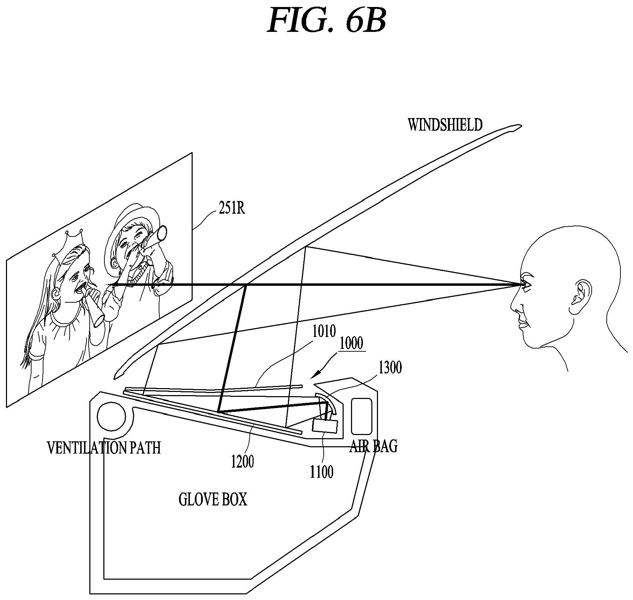

To achieve those aspects, a vehicle imaging device according to the specification, particularly, a personalized infotainment device for a vehicle, will be described. In this regard, FIG. 6A is a view of a configuration in which a screen of a certain ratio is formed in a specific region of front glass of a vehicle. FIG. 6B is a view of a structure in which a vehicle imaging device for creating the screen of the certain ratio of FIG. 6A is arranged inside a dashboard of the vehicle.

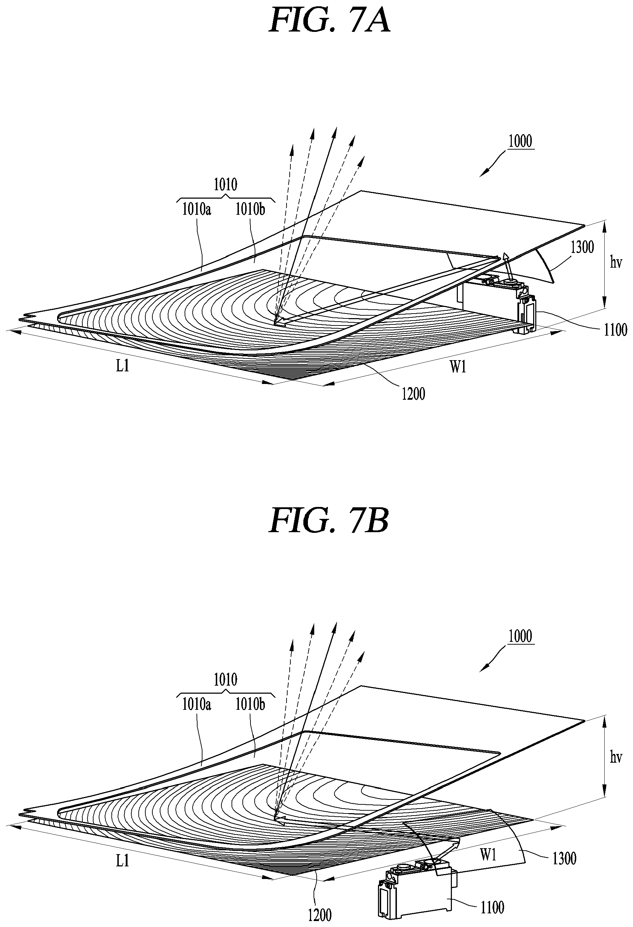

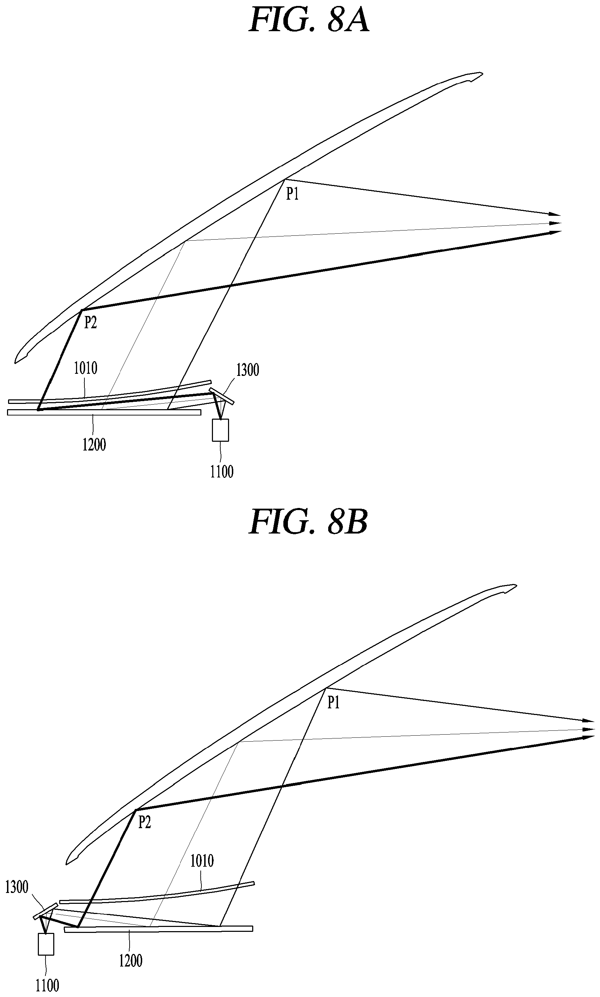

In some embodiments, FIGS. 7A and 7B are views of a structure in which a picture generation unit and internal components of the vehicle imaging device of FIG. 6B are arranged inside a cover. FIG. 8A is a view of a structure in which the picture generation unit is arranged in a front region of a screen panel in the vehicle imaging device of FIG. 7A. FIG. 8B is a view of a structure in which the picture generation unit is arranged in a front region of a screen panel in the vehicle imaging device of FIG. 7A.

Referring to FIG. 6A, an image having a width Wa in one axial direction and a length La in another axial direction may be displayed in a specific region 251R of a windshield of a vehicle. The image may be displayed in a specific region of a windshield on the passenger seat inside the vehicle. The image displayed in the specific region of the windshield of the passenger seat may be displayed such that the width Wa in the one axial direction is larger than the length La in the another axial direction.

Referring to FIGS. 6A to 7B, a vehicle imaging device 1000 according to the specification may be implemented as a personalized infotainment display (PID) for a user seated in the passenger seat of the vehicle. The PID may be implemented to have a large screen of at least a predetermined width or length for the passenger seat. The PID may provide entertainment content, such as movies/sports/music, and Internet browsing functions. The PID may provide driving assistance functions, such as navigation and the like. The PID may provide document browsing & editing and mobile connecting functions.

Referring to FIGS. 6A to 7B, the vehicle imaging device 1000 includes a cover 1010, a picture generation unit (PGU) 1100, a screen panel 1200, and a mirror 1300. The vehicle imaging device 1000 may be placed in an inner region of the vehicle, avoiding internal vehicle structures, such as a glove box, an air conditioner, and an airbag. A vertical height hv from a bottom of the picture generation unit (PGU) 1100 to an end of the cover 1010 may be implemented within a certain range of about 100 mm, but is not limited thereto. A width W1 of the screen panel 1200 in the one axial direction may be implemented in a range of about 280 to 420 mm, but is not limited thereto. A length L1 of the screen panel 1200 in the another axial direction may be implemented in a range of about 360 to 540 mm, but is not limited thereto.

Referring to FIG. 7A, the PGU 1100 arranged in the one axial direction may be implemented as a front surface structure. The PGU 1100 may be positioned spaced apart from one end or another end of the screen panel 1200. Light emitted from the PGU 1100 may be reflected from the mirror 1300 above the PGU 1100 and the screen panel 1200.

Referring to FIG. 7A, the PGU 1100 arranged in the another axial direction may be implemented as a side surface structure. The PGU 1100 may be positioned spaced apart from a side end, for example, a left or right end of the screen panel 1200. Light emitted from the PGU 1100 may be reflected from the mirror 1300 and the screen panel 1200 on the side of the PGU 1100.

The cover 1010 may form the appearance of the dashboard of the vehicle and may be arranged on the passenger seat of the vehicle. The PGU 1100 may be arranged inside the dashboard. The PGU 1100 may be configured to emit light upward or to one side so that an image is displayed in a specific region within the field of view of a user seated in the passenger seat.

The mirror 1300 may be arranged between the PGU and the cover. The mirror 1300 may be configured to reflect light, which is generated (emitted) upward or to the one side by the PGU 1100. Light reflected from the mirror 1300 may be reflected from the screen panel 1200 so that the image may be displayed in the specific region 251R of the windshield of the vehicle. The mirror 1300 may be, but is not limited to, a single-focus mirror.

The screen panel 1200 may be arranged between the PGU 1100 and the mirror 1300. The screen panel 1200 may reflect light, reflected from the mirror 1300, so that an image by the reflected light passes through the cover 1010. The screen panel 1200 and the mirror 1300 may be designed so that the image generated in the PGU 1100 can be projected on the screen panel 1200 through the mirror 1300 even at a short projection distance less than a certain distance. The image projected at the short projection distance may be reflected from the screen panel 1200, which is designed with angle orientation, to be visible only to the passenger in the passenger seat.

The image by the light reflected from the screen panel 1200 may be displayed in the specific region 251R of the windshield of the passenger seat. The image displayed in the specific region 251R of the windshield of the passenger seat may be displayed such that the width Wa in the one axial direction is larger than the length La in the another axial direction. One end of the image displayed in the specific region 251R of the windshield of the passenger seat may be set to be out of the driver's field of view.

A special screen panel and single-focus mirror designed to be thin and small in volume may be applied to the vehicle imaging device 1000 to avoid internal vehicle structures, such as the glove box, the air conditioner, and the airbag. A control panel may be arranged on a right armrest of the passenger seat to facilitate the passenger in the passenger seat to manipulate the vehicle imaging device 1000. Display of an image and reproduction of content in the specific region 251R of the windshield of the passenger seat may be performed through the control panel arranged on the passenger seat.

The width Wa and length La of the image displayed in the specific region 251R of the windshield on the passenger seat may be associated with first width W1 and length L1 of the screen panel 1200. In this regard, the screen panel 1200 may be formed inside the dashboard to have the first width W1 in the one axial direction and the first length L1 in the another axial direction. A ratio of the first width W1 in the one axial direction and the first length L1 in the another axial direction may be set as a first ratio. A ratio of the width Wa and the length La of the image displayed on the windshield may be set as a second ratio.

A top of the image displayed on the windshield of the passenger seat may be positioned lower than a center line of the windshield. The first ratio of the first width W1 and the first length L1 of the screen panel 1200 may be set to at least 5:1. Accordingly, the second ratio of the width Wa to the length La of the image displayed on the windshield may also be set to at least 5:1.

In some embodiments, the cover 1010 of the vehicle imaging device 1000 according to the specification may include a transmission region (or transparent region) through which optical signals including images are transmitted, and a non-transmission region (or opaque region) in which internal components are arranged. Referring to FIGS. 7A and 7B, the cover 1010 may include an opaque region 1010a and a transparent region 1010b.

Referring to FIGS. 6A to 7B, the opaque region 1010a may be formed in one side region and/or another side region corresponding to regions where the PGU 1100 and the mirror 1300 are arranged. The transparent region 1010b may be formed to correspond to a region where the screen panel 1200 is arranged. The opaque region 1010a may be formed to surround the transparent region 1010b. An image formed by reflection from the screen panel 1200 may pass through the transparent region 1010b of the cover 1010 to be displayed in the specific region 251R of the windshield in the passenger seat.

In some embodiments, the PGU 1100 of the vehicle imaging device 1000 according to the specification may be implemented as a front PGU structure in which the PGU is arranged spaced apart from one end of the screen panel 1200 or a rear PGU structure in which the PGU is arranged spaced apart from another end of the screen panel 1200. Referring to FIGS. 6A to 8A, the PGU 1100 may be formed as a front PGU structure that is positioned spaced apart from one end of the screen panel 1120 to be adjacent to a user seated in the passenger seat. Accordingly, the one end of the screen panel 1120 may be formed at a distance closer to the passenger seat than the another end of the screen panel 1120.

Light reflected from the mirror 1300 and the screen panel 1200 may be reflected at different reflection angles in different regions of the windshield. Accordingly, an image can be displayed within the field of view of the user or passenger seated in the passenger seat. The different regions of the windshield may include a region from a first point P1 adjacent to the one end of the screen panel 1120 to a second point P2 adjacent to the another end. A length from the first point P1 to the second point P2 forming the different regions of the windshield may correspond to the length La in the another axial direction of the specific region 251R of the windshield. A vertical distance between the cover 1010 and the screen panel 1200 may be formed to be shorter at the one end of the screen panel 1120 than at the another end.

Referring to FIGS. 6A and 8B, the PGU 1100 may be formed as a rear PGU structure that is positioned spaced apart from the another end of the screen panel 1120 to be positioned at a distance far from the user seated in the passenger seat. Accordingly, the another end of the screen panel 1120 may be formed at a distance farther from the passenger seat than the one end of the screen panel 1120.

Light reflected from the mirror 1300 and the screen panel 1200 may be reflected at different reflection angles in different regions of the windshield. Accordingly, an image can be displayed within the field of view of the user or passenger seated in the passenger seat. The different regions of the windshield may include a region from a first point P1 adjacent to the one end of the screen panel 1120 to a second point P2 adjacent to the another end. A length from the first point P1 to the second point P2 forming the different regions of the windshield may correspond to a length La in the another axial direction of the specific region 251R of the windshield. A vertical distance between the cover 1010 and the screen panel 1200 may be formed to be farther from the another end of the screen panel 1120 than from the one end.

Referring to FIGS. 6A to 8A, in the front PGU structure, the mirror 1300 may be formed in a curved shape or a plane shape. Referring to FIGS. 6B to 7B, one surface of the mirror 1300 adjacent to the one end of the screen panel 1200, onto which light emitted from the PGU 1100 is incident, may be formed in a curved shape. The mirror 1300 formed in the curved shape may be arranged to be tilted at a certain angle toward the screen panel 1200 with respect to a vertical axis. The screen panel 1200 may be formed in a tilted structure in which the one end is arranged at a lower point than the another end on the vertical axis.

Referring to FIG. 8A, one surface of the mirror 1300 adjacent to the one end of the screen panel 1200, onto which light emitted from the PGU 1100 is incident, may be formed in a plane shape. The mirror 1300 formed in the plane shape may be arranged to be tilted at a certain angle toward the screen panel 1200 with respect to the vertical axis. The screen panel 1200 may be arranged horizontally with the one end and the another end formed at the same point on the vertical axis.

Referring to FIG. 8B, one surface of the mirror 1300 adjacent to the another end of the screen panel 1200, onto which light emitted from the PGU 1100 is incident, may be formed in a plane shape. The mirror 1300 formed in the plane shape may be arranged to be tilted at a certain angle toward the screen panel 1200 with respect to the vertical axis. The screen panel 1200 may be formed in a tilted structure in which the one end is arranged at an upper point than the another end on the vertical axis.

Referring to FIGS. 6A to 8B, a field of view (FoV) of an image implemented by the vehicle imaging device 1000 according to the specification, an image size, and a volume of the vehicle imaging device may be implemented as shown in Table 1. In this regard, low/mid/high may indicate that the image size is low/mid/high or that the volume of the vehicle imaging device is low/mid/high.

**[Table 1]**

| | Low | Mid | High |
|---|---|---|---|
| FoV (Field of View) | 15° x 8.3° | 18.7 °x 10.4° | 22.4 °x 12.5° |
| Image size | 16" @1.2m | 20" @1.2m | 24" @1.2m |
| Resolution (pixel/°) | > 55 | > 65 | > 85 |
| Eyebox size (HxV) | 120x130mm | | |
| Volume | 4.0L | 6.3 L | 9.1 L |

Referring to Table 1 and FIGS. 6A to 8B, an image displayed in the specific region 251R of the windshield on the passenger seat of the vehicle by the vehicle imaging device 1000 may be implemented as a first image, a second image, or a third image having a certain size. The size of the first image, the second image, or the third image may be set to about 16 inches, 20 inches, or 24 inches, but is not limited thereto. For the first, second and third images, a horizontal distance to the windshield of the vehicle in the field of view of the user seated in the passenger seat may be set to about 1.2 m, but is not limited thereto. For the first image, the second image, and the third image, a size of an eye-box formed in the field of view of the user seated in the passenger seat may be set to 120 x 130 mm in the horizontal and vertical axis directions, but is not limited thereto. The field of view of the first image implemented with about 16 inches may be 15° x 8.3°, the resolution of the first image may be set to at least 55 pixels per unit angle, and the volume of a glove box in which the vehicle imaging device 1000 is embedded may be implemented as about 4 L, but are not limited thereto. The field of view of the second image implemented with about 18 inches may be 18.7° x 10.4°, the resolution of the second image may be set to at least 65 pixels per unit angle, and the volume of the glove box in which the vehicle imaging device 1000 is embedded may be implemented as about 6.3 L, but are not limited thereto. The field of view of the third image implemented with about 20 inches may be 22.4° x 12.5°, the resolution of the third image may be set to at least 85 pixels per unit angle, and the volume of the glove box in which the vehicle imaging device 1000 is embedded may be implemented as about 9.1 L, but are not limited thereto.

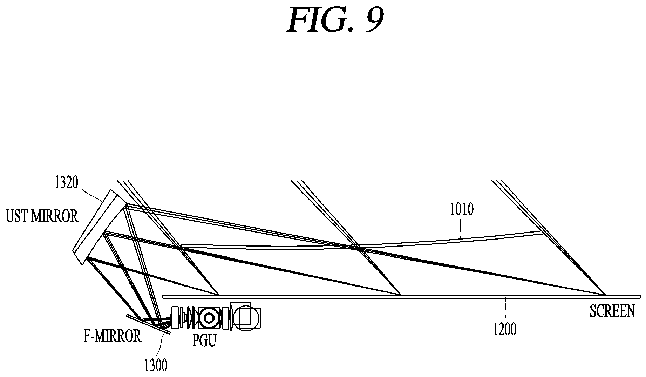

In some embodiments, the PGU of the vehicle imaging device according to the specification may be formed in a structure arranged in a horizontal direction on one side of the screen panel. In this regard, FIG. 9 is a view of a structure of a vehicle imaging device in which a PGU is arranged horizontally on one side of a screen panel.

Referring to FIG. 9, the vehicle imaging device 1000 may be configured to include a cover 1010, a PGU 1100, a screen panel 1200, a mirror 1300, and a second mirror 1320. The second mirror 1320 may be arranged in one side region above the screen panel 1200. The PGU 1100 may be arranged in one side region below the screen panel 1200. The second mirror 1320 may be arranged at a distance farther from the end of the screen panel 1200 than the mirror 1300. Light output from the PGU 1100 may be reflected from the mirror 1300 and the second mirror 1320. Referring to FIG. 6A and FIG. 9, light reflected from the second mirror 1320 may be reflected again from the screen panel 1200 to be incident onto the specific region 251R of the windshield, so that an image can be displayed in the specific region 251R.

In some embodiments, the resolution of an image provided by the vehicle imaging device may be set to 854 x 480, 1280 x 720, or 1920 x 1080, but is not limited thereto. An image with a resolution of 854 x 480 may be implemented as a full wide extended graphics array (FWXGA). An image with a resolution of 1280 x 720 may be implemented as high density (HD). An image with a resolution of 1920 x 1080 may be implemented as full high density (FHD).

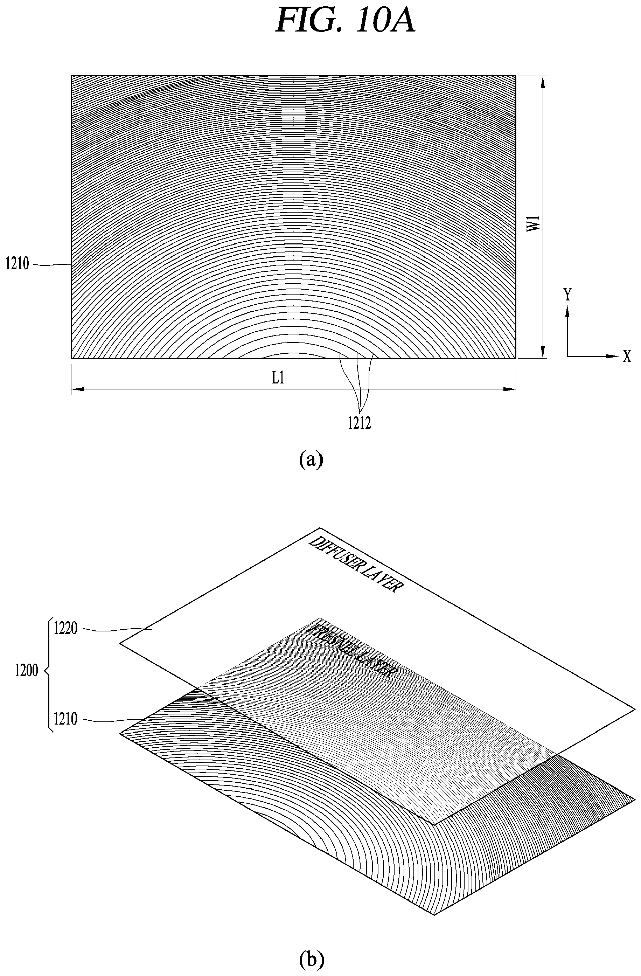

In some embodiments, in the vehicle imaging device according to the specification, the screen panel may include a plurality of layers. In this regard, FIG. 10A is a view of a structure in which a screen panel of a vehicle imaging device according to this specification includes a plurality of layers. Referring to FIG. 7A through (a) of FIG. 10A, a reflective layer 1210 of the screen panel 1200 may have patterns 1212 arranged with being spaced apart from each other. The patterns 1212 of the reflective layer 1210 may constitute a partial area of an ellipse formed in the one and another axial directions. The patterns 1212 of the reflective layer 1210 may be arranged spaced apart in the another axial direction.

Referring to FIG. 7 through (b) of FIG. 10A, the screen panel 1200 may be configured to include a reflective layer 1210 and a diffusion layer 1220. The reflective layer 1210 may have a fresnel structure and may also be referred to as a fresnel layer. The reflective layer 1210 may be arranged so that patterns formed in the another axial direction are spaced apart in the one axial direction. The diffusion layer 1220 may be arranged on one surface of the reflective layer 1210. A rear surface of the diffusion layer 1220 may be attached to the one surface of the reflective layer 1210.

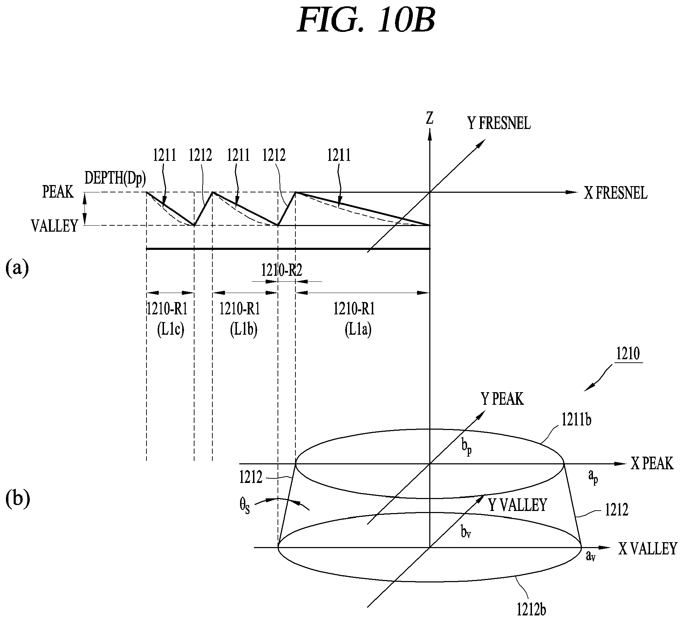

FIG. 10B is a view of a fresnel structure of a reflective layer of a screen panel according to the specification. (a) of FIG. 10B is a cross-sectional view of the reflective layer 1210 of the screen panel. Referring to (a) of FIG. 10B, the reflective layer 1210 of the screen panel may be formed to have a certain depth Dp. The reflective layer 1210 may include first patterns 1211 in a first region 1210-R1 and second patterns 1212 in a second region 1210-R2. The first patterns 1211 may be formed as metal patterns and configured to reflect light. The second patterns 1212 may be formed as metal patterns or as non-metal patterns.

Referring to FIGS. 7 to 8B and FIG. 10B, light incident from the mirror 1300 in a desired direction may be reflected from the first patterns 1211. In another example, light incident in another undesired direction may be absorbed by the second patterns 1212 formed as the non-metal patterns. Accordingly, the light incident in the another undesired direction may not be reflected from the reflective layer 1210 of the screen panel, thereby improving quality of the image displayed on the windshield.

In the first region 1210-R1, the reflective layer 1210 may be formed as the first pattern 1211 having a first slope angle. In the second region 1210-R2, the reflective layer 1210 may be formed as the second pattern 1212 having a second slope angle greater than the first slope angle. The reflective layer 1210 may be formed in a structure in which the first pattern 1211 of the first region 1210-R1 and the second pattern 1212 of the second region 1210-R2 are repeatedly formed. Referring to FIGS. 7A, 10A, and 10B, the patterns may be arranged such that a spacing between the patterns 1211 and 1212 of the reflective layer 1210 decreases as a vertical distance from the screen panel 1200 to the cover 1010 decreases.

The first pattern 1211 may be formed in a certain linear shape or parabolic shape.

(b) of FIG. 10B shows elliptical structures of upper and lower surfaces of the reflective layer 1210 of the screen panel and the second pattern 1212 on a side surface of the reflective layer 1210. Referring to (b) of FIG. 10B, a first boundary region 1211b formed on the upper surface of the reflective layer 1210 may be referred to as a peak structure. The first boundary region 1211b may have an elliptical structure. The first boundary region 1211b having the elliptical structure may be formed as bₚ²x²+aₚ²y² - aₚ²bₚ²=0. In this regard, aₚ denotes an x value of a peak at y=0 and bₚ denotes a y value of the peak at x=0. A third metal pattern 1213 formed on the lower surface may be referred to as a valley structure. A second boundary region 1212b may also have the elliptical structure. The second boundary region 1212b having the elliptical structure may be formed as bᵥ²x²+aᵥ²y² - aᵥ²bᵥ²=0. In this regard, aᵥ denotes an x value of a valley at y=0, and bᵥ denotes a y value of the valley at x=0.

Referring to FIGS. 6A to 10B, the reflective layer 1210 may have patterns 1211 formed to reflect light emitted from the PGU 1100. The patterns 1211 may have a cross-section that is linear or parabolic and a front surface that is formed in an elliptical shape. The diffusion layer 1220 may be arranged on one surface of the reflective layer 1210, and may be configured so that light reflected from the reflective layer 1210 is diffused within a certain angular range based on a direction perpendicular to the cover 1010. The patterns 1211 may be formed such that lengths L1a, L1b, and L1c of the patterns 1211 of the reflective layer 1210 in the one axial direction decrease as a vertical distance from the screen panel 1200 to the cover 1010 decreases. The first slope angle of the patterns 1211 of the reflective layer 1210 may increase as the vertical distance from the screen panel 1200 to the cover 1010 decreases.

The reflective layer 1210 may include first patterns 1211 and second patterns 1212. The first patterns 1211 may have a cross-section formed in a linear or parabolic shape having a first slope angle and a front surface formed in an elliptical shape, and may be configured to reflect light. The second patterns 1212 may be arranged between the first patterns 1211. The second patterns 1212 may be formed in a linear or parabolic shape to have a second slope angle greater than the first slope angle of the first patterns 1211. The first patterns 1211 of the reflective layer 1210 in one side region where the PGU 1100 is arranged may have a length that is longer than a length of the first patterns 1211 of the reflective layer 1210 in another side region.

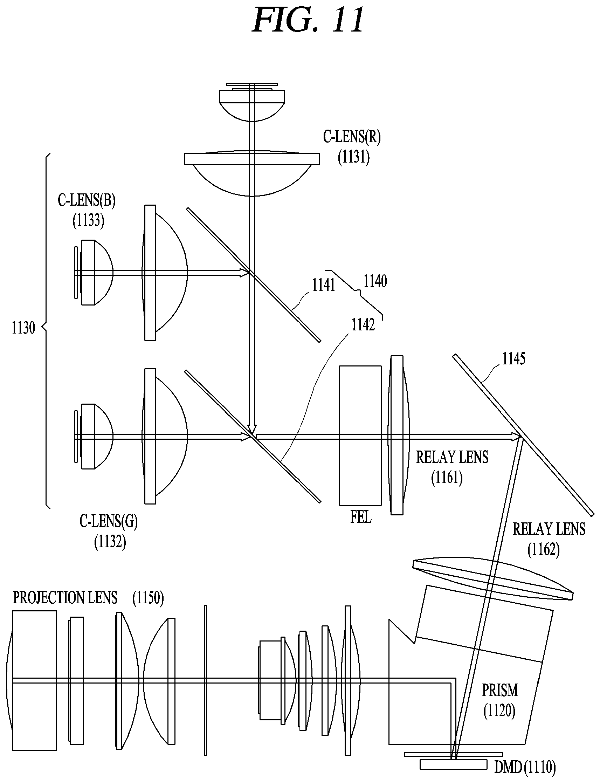

In some embodiments, the PGU 1100 of the vehicle imaging device according to the specification may be configured to include a plurality of optical components. In this regard, FIG. 11 is a view of a detailed structure of a PGU of a vehicle imaging device according to the specification. Referring to FIG. 11, the PGU 1100 may include a display panel 1110, a prism 1120, and a projection lens 1150. The PGU 1100 may be configured to further include at least one lens 1130, a dichroic mirror 1140, and an inner mirror 1145.

The at least one lens 1130 may be configured to output light of a specific color. The dichroic mirror 1140 may be configured to transmit or reflect light output from the at least one lens 1130 according to different wavelength bands. The inner mirror 1145 may be configured to reflect light output from the at least one lens 1130.

The display panel 1110 may be configured to reflect light. The display panel 1110 that reflects light may have a reflective structure. For this purpose, the display panel 1110 may be configured as a DMD, but is not limited thereto. The prism 1120 may be arranged spaced apart from the display panel 1110. The prism 1120 may be arranged between the display panel 1110 and the inner mirror 1120. The prism 1120 may be configured to refract and output light reflected from the inner mirror 1120 and the display panel 1110. The projection lens 1150 may be arranged spaced to one side from the prism 1120. The projection lens 1150 may be configured such that a plurality of lenses are spaced apart from each other.

The at least one lens 1130 may include a first lens 1131 that outputs red light, a second lens 1132 that outputs green light, and a third lens 1133 that outputs blue light. The dichroic mirror 1140 may be configured to include a first dichroic mirror 1141 and a second dichroic mirror 1142. The first dichroic mirror 1141 may be arranged in the front region of the first lens 1131. The first dichroic mirror 1141 may be arranged between the first lens 1131 in the one axial direction and the third lens 1133 in the another axial direction. The second dichroic mirror 1142 may be arranged in the front region of the second lens 1132. The second dichroic mirror 1142 may be arranged between the first lens 1131 in the one axial direction and the second lens 1132 in the another axial direction. The second dichroic mirror 1142 may be arranged between the second lens 1132 and the inner mirror 1145.

The first dichroic mirror 1141 may be configured to transmit red light from the first lens 1131 and reflect blue light from the third lens 1133. The second dichroic mirror 1142 may be configured to transmit green light from the second lens 1132 and reflect red light from the first lens 1131 and blue light from the third lens 1133.

The PGU 1100 may be configured to include a plurality of relay lenses. The PGU 1100 may be configured to include a first relay lens 1161 and a second relay lens 1162. The first relay lens 1161 may be arranged between the second dichroic mirror 1142 and the inner mirror 1145. The first relay lens 1161 may be configured to transmit red light from the first lens 1131, green light from the second lens 1132, and blue light from the third lens 1133 to the inner mirror 1145.

The second relay lens 1162 may be arranged between the inner mirror 1145 and the prism 1120. The second relay lens 1162 may be configured to transmit red light, green light, and blue light reflected from the inner mirror 1145 to the prism 1120. Accordingly, red light, blue light, and green light reflected from or transmitted through the second dichroic mirror 1142 can pass through the first relay lens 1161 and be reflected from the inner mirror 1145. The red light, blue light, and green light reflected from the inner mirror 1145 can pass through the second relay lens 1162, the prism 1120, and the projection lens 1150.

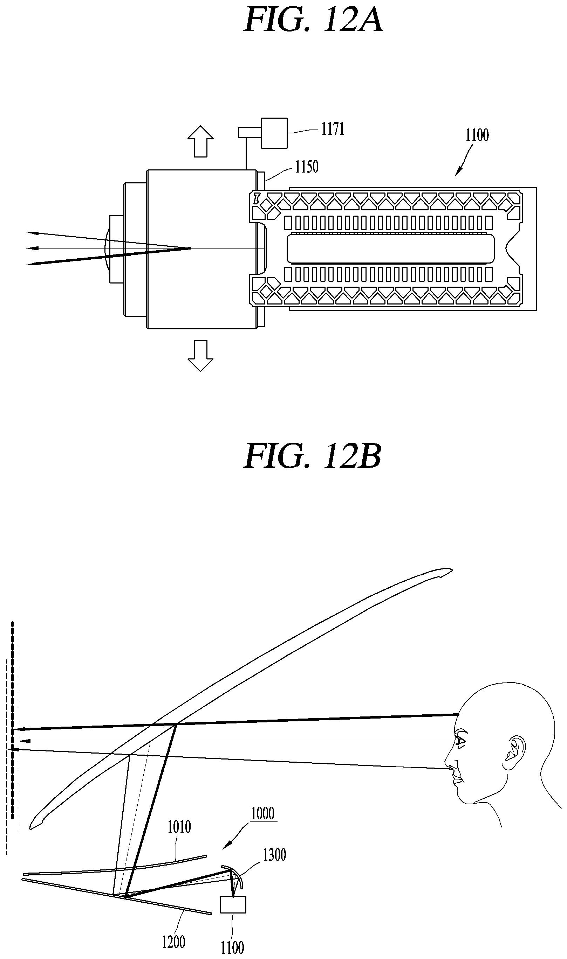

In some embodiments, the lens structure in the PGU 1100 of the vehicle imaging device according to the specification may be moved in a vertical axis direction to change a screen display region where an image is displayed on the windshield of the vehicle. In this regard, FIGS. 12A to 14B illustrate examples in which the screen display region in which an image is displayed on the windshield of the vehicle changes according to movement of different components of the vehicle imaging device.

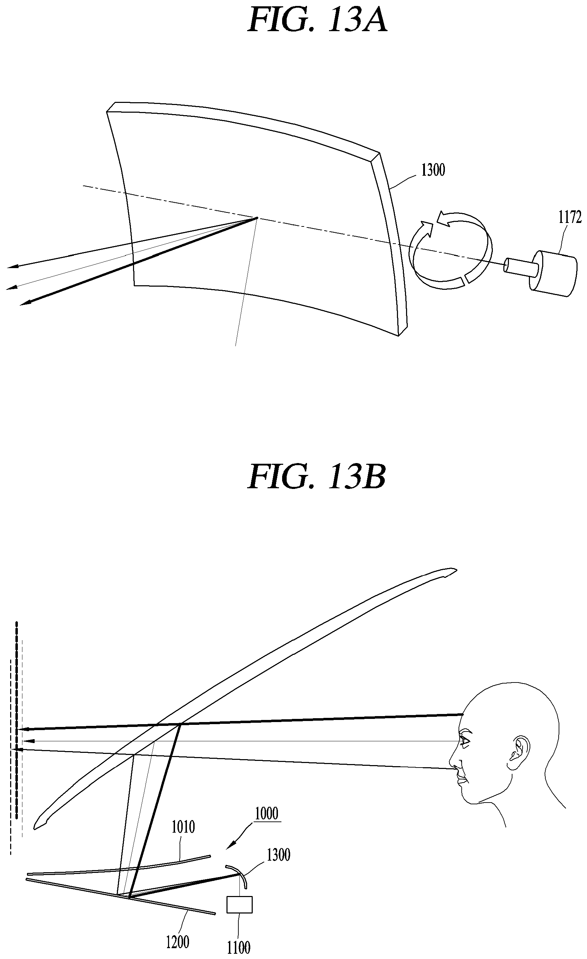

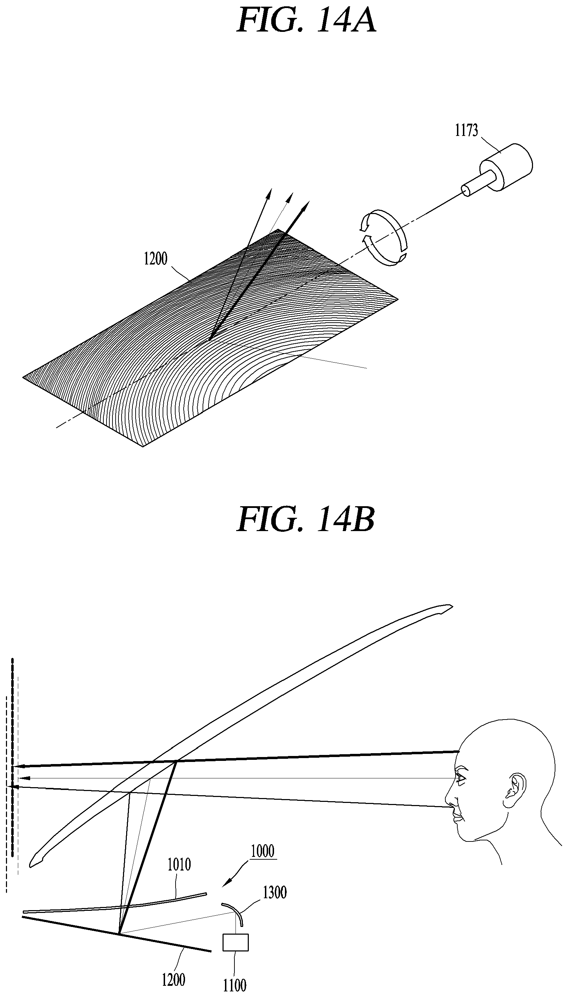

FIGS. 12A and 12B are views of a titable structure of a picture generation unit (PGU), and a structure in which a screen display region, in which an image is displayed on a windshield of a vehicle, changes according to the titable structure of the PGU. FIGS. 13A and 13B are views of a titable structure of a mirror, and a structure in which a screen display region, in which an image is displayed on a windshield of a vehicle, changes according to the tiltable structure of the mirror. FIGS. 14A and 14B are views of a titable structure of a screen panel, and a structure in which a screen display region, in which an image is displayed on a windshield of a vehicle, changes according to the tiltable structure of the screen panel.

Referring to FIGS. 12A, 13A, and 14A, the screen display region may change in the vertical axis direction. In this regard, the user's field of view may change depending on changes in the user's posture, and the like. The eye-box, which takes into account the change in the user' field of view, needs to be implemented as a region wider than a screen display region where an image is displayed. For this purpose, a full eye-box may be implemented by a large diffusing angle of the screen panel 1200.

Alternatively, the eye-box may be adjusted, as illustrated in FIG. 12A, FIG. 13A, or FIG. 14A, by shifting the projection lens 1150 of FIG. 12B, tilting the mirror 1300 of FIG. 13B, or tilting the screen panel 1200 of FIG. 14B.

Referring to FIG. 5, the controller 170 of the vehicle may operate as a drive control unit. Referring to FIGS. 12A and 12B, the drive control unit 170 may control the PGU 1100, the screen panel 1200, and the mirror 1300 to be tilted.

Referring to FIGS. 5, 11, 12A, and 12B, the drive control unit 170 may be operably coupled with the PGU 1100. The drive control unit 170 may control a first motor 1171 to move the projection lens 1150 inside the PGU 1100 in the vertical axis direction. As the projection lens 1150 inside the PGU 1100 moves in the vertical axis direction, a display position of an image displayed in a specific region may be adjusted in another axial direction.

A tall eye-box may be implemented by shifting downward the projection lens 1150 of FIGS. 12A and 12B. A short eye-box may be implemented by shifting upward the projection lens 1150 of FIGS. 12A and 12B. A nominal eye-box may be implemented when the projection lens 1150 of FIGS. 12A and 12B is arranged at a normal position.

In some embodiments, the mirror structure of the vehicle imaging device according to the specification may be tilted in the horizontal axis direction to change a screen display region where an image is displayed on the windshield of the vehicle. In this regard, FIGS. 13A and 13B are views of a titable structure of a mirror, and a structure in which a screen display region, in which an image is displayed on a windshield of a vehicle, changes according to the tiltable structure of the mirror.

Referring to FIG. 5, the controller 170 of the vehicle may operate as a drive control unit. Referring to FIGS. 13A and 13B, the drive control unit 170 may control the PGU 1100, the screen panel 1200, and the mirror 1300 to be tilted.

A tall eye-box may be implemented by shifting the mirror 1300 of FIGS. 13A and 13B to one side. A short eye-box may be implemented by shifting the mirror 1300 of FIGS. 13A and 13B to another side. A nominal eye-box may be implemented when the mirror 1300 of FIGS. 13A and 13B is arranged at a normal position.

Referring to FIGS. 5, 11, 13A, and 13B, the drive control unit 170 may be operably coupled with the mirror 1300. The drive control unit 170 may control a second motor 1172 to tilt the mirror 1300 in the horizontal axis direction. As the mirror 1300 is tilted in the horizontal axis direction, a display position of an image displayed in a specific region may be adjusted in the another axial direction.

In some embodiments, the screen panel of the vehicle imaging device according to the specification may be tilted in a central axis direction to change a screen display region where an image is displayed on the windshield of the vehicle. In this regard, FIGS. 14A and 14B are views of a titable structure of a mirror, and a structure in which a screen display region, in which an image is displayed on a windshield of a vehicle, changes according to the tiltable structure of the mirror.

Referring to FIG. 5, the controller 170 of the vehicle may operate as a drive control unit. Referring to FIGS. 14A and 14B, the drive control unit 170 may control the PGU 1100, the screen panel 1200, and the mirror 1300 to be tilted.

Referring to FIGS. 5, 11, 14A, and 14B, the drive control unit 170 may be operably coupled with the screen panel 1200. The drive control unit 170 may control a third motor 1173 to tilt the screen panel 1200 in the central axis direction. As the screen panel 1200 is tilted in the central axis direction, a display position of an image displayed in a specific region may be adjusted in the another axial direction.

A tall eye-box may be implemented by shifting the screen panel 1200 of FIGS. 14A and 14B to one side. A short eye-box may be implemented by shifting the screen panel 1200 of FIGS. 14A and 14B to another side. A nominal eye-box may be implemented when the screen panel 1200 of FIGS. 14A and 14B is arranged at a normal position.

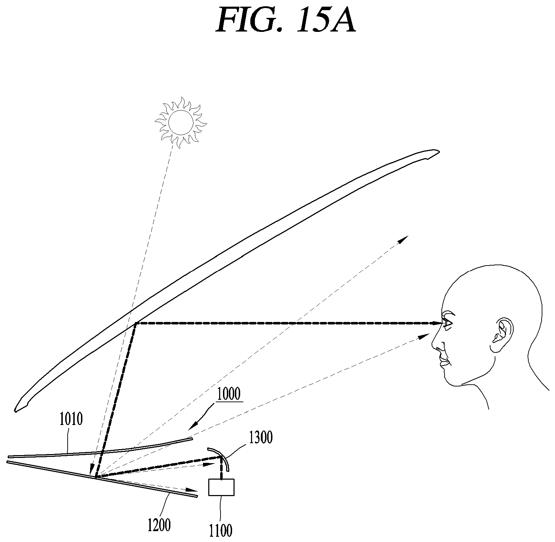

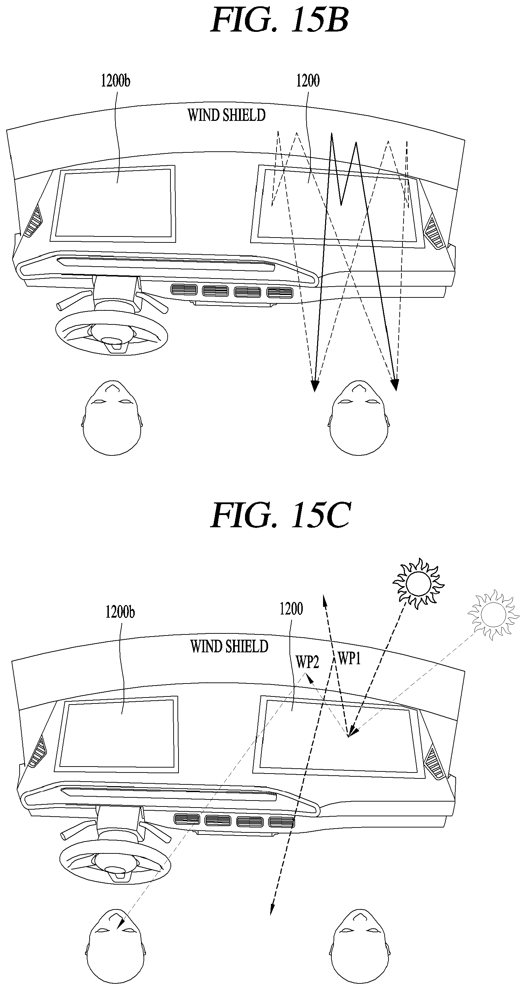

In some embodiments, a reflective layer of a screen panel of a vehicle imaging device according to the specification may be configured to reflect light forming an image and sunlight. In this regard, FIG. 15A is a view of a structure in which light forming an image and sunlight are reflected from a screen panel and formed into a user's field of view. FIG. 15B is a view of a region in which reflected sunlight is formed depending on an incident angle of the sun. FIG. 15C is a view of a region in which light forming an image is generated in a vehicle imaging device according to the specification.

Referring to FIG. 15A, light forming an image may be reflected from the mirror 1300 and the screen panel 1200 in the PGU 1100 to pass through the cover 1010, and then may be reflected from the windshield of the vehicle to proceed into the field of view of the user seated in the passenger seat. Accordingly, the user seated in the passenger seat may perceive an image formed by reflection in a specific region of the windshield of the vehicle. Therefore, a personal infotainment display for a vehicle can be implemented.

Sunlight may pass through the windshield of the vehicle and the cover 1010 and may be reflected from the screen panel 1100. The reflected sunlight may pass through the cover 1010 and proceed to a point higher than the user's field of view. As an angle of incidence of sunlight decreases, the sunlight may pass through the windshield of the vehicle and the cover 1010 and may be reflected from the screen panel 1100. The reflected sunlight may proceed from an end of the cover 1010 to the user's field of view.

Although the reflected sunlight may proceed from the end of the cover 1010 toward the user's field of view, referring to FIGS. 7A and 7B, the end of the cover 1010 may be formed as the opaque region 1010a to block sunlight. Accordingly, referring to FIGS. 7A, 7B, and 15A, as the angle of incidence of sunlight decreases, the sunlight may pass through the windshield of the vehicle and the cover 1010 and may be reflected from the screen panel 1100. The reflected sunlight may be blocked by the opaque region 1010a. Accordingly, as the angle of incidence of sunlight decreases, the sunlight may pass through the windshield of the vehicle and the cover 1010 to be reflected from the screen panel 1100, and may be blocked by the opaque region 1010a of the cover 1010. This may result in solving a problem of making it difficult to visually recognize an image in a specific region of the windshield due to an external light source, such as sunlight, at the user's viewing position.

Referring to FIGS. 6A, 10, 15A, and 15B, light may be reflected through the reflective layer 1210 of the screen panel 1200 so that an image is displayed in the specific region 251R of the windshield on the passenger seat. In this regard, reflected light may be formed within the field of view of the user seated in the passenger seat and outside the field of view of the driver seated in the driver's seat.

In this regard, an image may be displayed in the specific region 251R of the windshield, as illustrated in FIG. 6A, by light reflected from the windshield of the vehicle, which is indicated by a dotted line in FIG. 15B. An ocean view may be formed within the field of view of the user seated in the passenger seat by light reflected from the windshield of the vehicle, which is indicated by a solid line in FIG. 15B. Accordingly, the image displayed in the specific region 251R of the windshield of the passenger seat by the reflected light may be formed only in the field of view of the user seated in the passenger seat. Accordingly, the image displayed in the specific region 251R of the windshield on the passenger seat may be formed outside the field of view of the driver seated in the driver's seat, thereby improving driver safety.

Referring to FIGS. 6A, 10, and 15A to 15C, the vehicle imaging device 1000 may be installed on the passenger seat of the vehicle, and may include the screen panel 1200. In this regard, the screen panel 1200 may be arranged in the vehicle video device 1000 embedded in the glove box on the passenger seat. A personalized infotainment display may be implemented by the vehicle imaging device embedded in the glove box on the passenger seat. In some embodiments, a separate vehicle imaging device may be embedded in the glove box on the driver's seat. A separate screen panel 1200b may be provided in the vehicle imaging device installed in the driver's seat. An image formed by the vehicle imaging device installed in the driver's seat may include driving-related screens. A screen including the driving-related screens may be implemented as a wide display with a large aspect ratio so that a width is larger than a length by at least a certain ratio.

Referring to FIGS. 6A, 10, and 15A to 15C, the reflective layer 1210 of the screen panel 1200 of the vehicle imaging device may be configured to reflect light forming an image and also reflect sunlight. When sunlight is incident at a first angle, sunlight reflected by the reflective layer 1210 may be incident at a first angle with respect to the horizontal axis and reflected from a first point Wp1 of the windshield. Sunlight that is reflected at an angle smaller than a threshold angle from the first point Wp1 of the windshield may proceed into the field of view of the driver seated in the driver's seat. Therefore, even when sunlight reflected at an angle smaller than the threshold angle proceeds into the driver's field of view, the reflected sunlight does not interfere with driving and may be helpful for driving as the surrounding environment becomes brighter.

When sunlight is incident at a second angle greater than the first angle, sunlight reflected by the reflective layer 1210 may be incident at the second angle with respect to the horizontal axis at a second point Wp2 of the windshield. Sunlight incident at the second angle at the second point of the windshield may pass through the windshield or be reflected from the second point Wp2, thereby proceeding to a region between the driver seat and the passenger seat. Therefore, sunlight reflected at an angle greater than the threshold angle may not proceed into the driver's field of view, thereby being suppressed from interfering with driving.

So far, a personalized infotainment device for a vehicle according to this specification has been described. The technical effects of the personalized infotainment device for the vehicle according to this specification may be summarized as follows, but are not limited thereto.

The technical features of a personalized infotainment device for a vehicle according to the specification may be summarized as follows.

According to this specification, a large-screen infotainment image may be implemented on a windshield of a passenger seat of a vehicle through an embedded structure other than a protruding structure, thereby providing a large-screen imaging device for the passenger seat.

According to this specification, a virtual optical system may be used to eliminate elements that may interfere with driving and to implement an image that is viewable only by a passenger in a passenger seat, thereby enhancing safe driving of a driver.

According to this specification, a personalized infotainment display which is thin and small may be implemented in a limited space inside a vehicle by using an ultra-short throw (UST) projector and a special screen.

According to this specification, a personalized infotainment device for a vehicle may be provided by utilizing a glove box, which are arranged inside a dashboard on a passenger seat of the vehicle, while avoiding an airbag, air conditioning components, and the like.

The effects of the disclosure are not limited to those effects mentioned above, and other effects not mentioned may be clearly understood by those skilled in the art from the description of the appended claims.

The disclosure may be implemented as computer-readable codes in a program-recorded medium. The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like. Also, the computer may include a processor or a controller. Therefore, the detailed description should not be limitedly construed in all of the aspects, and should be understood to be illustrative. The scope of the present disclosure should be determined by reasonable interpretation of the appended claims.

## Claims

1. A vehicle imaging device (1000) comprising:
a cover (1010) forming an exterior of a dashboard of a vehicle and arranged on a passenger seat side of the vehicle;
a picture generation unit, PGU, (1100) arranged inside the dashboard and configured to generate light upward or to one side;
a mirror (1300) arranged between the PGU (1100) and the cover (1010) and configured to reflect the light generated upward or to the one side; and
a screen panel (1200) arranged between the PGU (1100) and the cover (1010), and configured to reflect light reflected by the mirror (1300) so that an image by the reflected light passes through the cover (1010),
wherein the image by the light reflected from the screen panel (1200) is displayed in a specific region of a windshield of the passenger seat, so that a width (Wa) of the image in one axial direction is larger than a length (La) in another axial direction.

2. The vehicle imaging device (1000) of claim 1, wherein the PGU (1100) is arranged spaced apart from one end of the screen panel (1200), and the one end is formed at a distance closer to the passenger seat than another end of the screen panel (1200),
the light reflected from the mirror (1300) and the light reflected from the screen panel (1200) are reflected at different reflection angles in different regions of the windshield, to form the image in a field of view of a passenger seated in the passenger seat,
the different regions of the windshield comprise a region from a first point (P1) adjacent to the one end to a second point (P2) adjacent to the another end, and
a vertical distance between the cover (1010) and the screen panel (1200) is formed to be shorter at the another end than at the one end.

3. The vehicle imaging device (1000) of claim 1, wherein the PGU (1100) is arranged spaced apart from another end of the screen panel (1200), and the another end is formed at a distance farther from the passenger seat than one end of the screen panel (1200),
the light reflected from the mirror (1300) and the light reflected from the screen panel (1200) are reflected at different reflection angles in different regions of the windshield, to form the image in a field of view of a passenger seated in the passenger seat,
the different regions of the windshield comprise a region from a first point (P1) adjacent to the one end to a second point (P1) adjacent to the another end, and
a vertical distance between the cover (1010) and the screen panel (1200) is formed to be farther from the another end than from the one end.

4. The vehicle imaging device (1000) of any one of claims 1 to 3, further comprising a second mirror (1320) arranged in one side region above the screen panel (1200),
wherein the PGU (1100) is arranged in one side region below the screen panel (1200),
the second mirror (1320) is arranged at a distance farther from an end of the screen panel (1200) than the mirror (1300), and
the light output from the PGU (1100) is reflected from the mirror (1300) and the second mirror (1320), and is reflected again from the screen panel (1200) to be incident onto the specific region of the windshield, so that the image is displayed in the specific region.

5. The vehicle imaging device (1000) of any one of claims 2 and 4, wherein one surface of the mirror (1300) adjacent to the one end of the screen panel (1200) onto which the light generated in the PGU (1100) is incident is formed in a curved shape or in a plane shape,
the mirror (1300) formed in the curved shape or the plane shape is arranged to be tilted at a certain angle toward the screen panel (1200) based on a vertical axis, and
the screen panel (1200) is formed in a tilted structure in which the one end is arranged at a lower point on the vertical axis than the another end or the one end of the screen panel (1200) is formed at a same point on the vertical axis as the another end.

6. The vehicle imaging device (1000) of any one of claims 3 and 4, wherein one surface of the mirror (1300) adjacent to the another end of the screen panel (1200) onto which the light generated in the PGU (1100) is incident is formed in a plane shape,
the mirror (1300) formed in the plane shape is arranged to be tilted at a certain angle toward the screen panel (1200) based on a vertical axis, and
the screen panel (1200) is formed in a tilted structure in which the one end is arranged at an upper point on the vertical axis than the another end.

7. The vehicle imaging device (1000) of any one of claims 1 to 6, wherein the cover (1010) comprises:
an opaque region (1010a) formed in one region or another region corresponding to a region where the PGU (1100) and the mirror (1300) are arranged; and
a transparent region (1010b) formed corresponding to a region where the screen panel (1200) is arranged,
the opaque region (1010a) is formed to surround the transparent region (1010b), and
the image formed by reflection from the screen panel (1200) passes through the transparent region (1010b) of the cover (1010) to be displayed in the specific region of the windshield located on the passenger seat side.

8. The vehicle imaging device (1000) of any one of claims 1 to 7, wherein the screen panel (1200) is formed inside the dashboard to have a first width (W1) in one axial direction and a first length (L1) in another axial direction,
a ratio of the first width (W1) and the first length (L1) is set to a first ratio,
a ratio of a width (Wa) and a length (La) of the image displayed on the windshield is set to a second ratio,
a top of the image displayed on the windshield located on the passenger seat side is positioned lower than a center line of the windshield, and
the first ratio and the second ratio are at least 5:1.

9. The vehicle imaging device (1000) of any one of claims 1 to 8, wherein the screen panel (1200) comprises:
a reflective layer (1210) having patterns to reflect the light generated in the PGU (1100), the patterns having a cross-section that is linear or parabolic and a front surface that is elliptical; and
a diffusion layer (1220) arranged on one surface of the reflective layer (1210) and configured to diffuse the light reflected from the reflective layer (1210) in a certain angular range based on a direction perpendicular to the cover (1010), and
wherein the patterns are arranged such that a length in one axial direction of the patterns of the reflective layer (1210) decreases as a vertical distance from the screen panel (1200) to the cover (1010) decreases.

10. The vehicle imaging device (1000) of claim 9, wherein the reflective layer (1210) comprises:
first patterns (1211) each having a cross-section formed in a linear or parabolic shape with a first slope angle and a front surface formed in an elliptical shape, and configured to reflect the light; and
second patterns (1212) arranged between the first patterns (1211) and having a second slope angle greater than the first slope angle, and
a length of the first patterns (1211) of the reflective layer (1210) in one side region where the PGU (1110) is arranged is longer than a length of the first patterns (1211) of the reflective layer (1210) in another side region.

11. The vehicle imaging device (1000) of any one of claims 1 to 10, wherein the PGU (1100) comprises:
at least one lens (1130) configured to output light of a specific color;
a dichroic mirror (1140) configured to transmit or reflect the light output from the lens (1130);
an inner mirror (1145) configured to reflect the light output from the at least one lens (1130);
a display panel (1110);
a prism (1120) arranged between the display panel (1110) and the inner mirror (1145) and configured to refract and output the light reflected from the inner mirror (1145) and the display panel (1110); and
a projection lens (1150) comprising a plurality of lenses arranged spaced apart from the prism (1120) to one side.

12. The vehicle imaging device (1000) of claim 11, wherein the at least one lens (1130) comprises a first lens (1131) that outputs red light, a second lens (1132) that outputs green light, and a third lens (1133) that outputs blue light, and
the dichroic mirror (1140) comprises:
a first dichroic mirror (1141) configured to transmit the red light and reflect the blue light; and
a second dichroic mirror (1142) configured to transmit the green light and reflect the red light and the blue light, wherein the PGU (1100) further comprises:
a first relay lens (1161) arranged between the second dichroic mirror (1142) and the inner mirror (1145); and
a second relay lens (1162) arranged between the inner mirror (1145) and the prism (1120),
the red light, the blue light, and the green light reflected from or transmitted through the second dichroic mirror (1142) pass through the first relay lens (1161) and are reflected from the inner mirror (1145), and
the red light, the blue light, and the green light reflected from the inner mirror (1145) pass through the second relay lens (1162), the prism (1120), and the projection lens (1150).

13. The vehicle imaging device (1000) of any one of claims 11 and 12, further comprising a drive control unit (170) configured to control movement of the PGU (1100), the mirror (1300), and the screen panel (1200),
wherein the drive control unit (170) is operatively coupled with the PGU (1100), and controls a first motor (1171) such that the projection lens (1150) in the PGU (1100) moves in a vertical axis direction, and
a display position of the image displayed in the specific region is adjusted in the another axial direction as the projection lens (1150) moves in the vertical axis direction.

14. The vehicle imaging device (1000) of claim 13, wherein the drive control unit (170) is operatively coupled with the mirror (1300) and controls a second motor (1172) such that the mirror (1300) is tilted in a horizontal axis direction, and
the display position of the image displayed in the specific region is adjusted in the another axial direction as the mirror (1300) is tilted in the horizontal axis direction,
wherein the drive control unit (170) is operatively coupled with the screen panel (1200) and controls a third motor (1173) such that the screen panel (1200) is tilted in a central axis direction, and
the display position of the image displayed in the specific region is adjusted in the another axial direction as the screen panel (1200) is tilted in the central axis direction.

15. The vehicle imaging device (100) of claim 9, wherein the light reflected through the reflective layer (1210) of the screen panel (1200) is formed inside a region of a field of view of a user seated in the passenger seat and outside a field of view of a driver seated in a driver seat, such that the image is displayed in the specific region of the windshield of the passenger seat,
wherein the reflective layer (1210) of the screen panel (1200) is configured to reflect sunlight,
the sunlight reflected from the reflective layer (1210), in case that the sunlight is incident at a first angle, is incident at the first angle with respect to a horizontal axis and reflected from a first point (Wp1) of the windshield, and
the sunlight reflected from the reflective layer (1210), in case that the sunlight is incident at a second angle greater than the first angle, is incident at the second angle with respect to the horizontal axis at a second point (Wp2) of the windshield, and passes through the windshield or is reflected from the second point (Wp2) to proceed into a region between the driver seat and the passenger seat.

## Patentansprüche

1. Fahrzeugbildgebungsvorrichtung (1000), die aufweist:
eine Abdeckung (1010), die ein Äußeres einer Instrumententafel eines Fahrzeugs bildet und auf einer Beifahrersitzseite des Fahrzeugs angeordnet ist;
eine Bilderzeugungseinheit, PGU, (1100), die im Inneren der Instrumententafel angeordnet und konfiguriert ist, Licht nach oben oder zur Seite zu erzeugen;
einen Spiegel (1300), der zwischen der PGU (1100) und der Abdeckung (1010) angeordnet und konfiguriert ist, das nach oben oder zu der einen Seite erzeugte Licht zu reflektieren; und
eine Bildschirmplatte (1200), die zwischen der PGU (1100) und der Abdeckung (1010) angeordnet ist, und konfiguriert ist, das vom Spiegel (1300) reflektierte Licht so zu reflektieren, dass ein durch das reflektierte Licht erzeugtes Bild durch die Abdeckung (1010) geht,
wobei das Bild durch das von der Bildschirmplatte (1200) reflektierte Licht in einem bestimmten Bereich einer Windschutzscheibe des Beifahrersitzes angezeigt wird, so dass eine Breite (Wa) des Bildes in einer axialen Richtung größer ist als eine Länge (La) in einer anderen axialen Richtung.

2. Fahrzeugbildgebungsvorrichtung (1000) nach Anspruch 1, wobei die PGU (1100) beabstandet von einem Ende der Bildschirmplatte (1200) angeordnet ist und das eine Ende in einem geringeren Abstand zum Beifahrersitz ausgebildet ist als ein anderes Ende der Bildschirmplatte (1200),
das vom Spiegel (1300) reflektierte Licht und das von der Bildschirmplatte (1200) reflektierte Licht unter unterschiedlichen Reflexionswinkeln in unterschiedlichen Bereichen der Windschutzscheibe reflektiert werden, um das Bild im Sichtfeld eines auf dem Beifahrersitz sitzenden Beifahrers zu erzeugen,
die unterschiedlichen Bereiche der Windschutzscheibe einen Bereich von einem ersten Punkt (P1) neben dem einen Ende bis zu einem zweiten Punkt (P2) neben dem anderen Ende aufweisen, und
ein vertikaler Abstand zwischen der Abdeckung (1010) und der Bildschirmplatte (1200) so ausgebildet ist, dass er am anderen Ende kürzer ist als an dem einen Ende.

3. Fahrzeugbildgebungsvorrichtung (1000) nach Anspruch 1, wobei die PGU (1100) beabstandet von einem anderen Ende der Bildschirmplatte (1200) angeordnet ist und das andere Ende in einem Abstand weiter vom Beifahrersitz entfernt ausgebildet ist als das eine Ende der Bildschirmplatte (1200),
das vom Spiegel (1300) reflektierte Licht und das von der Bildschirmplatte (1200) reflektierte Licht unter unterschiedlichen Reflexionswinkeln in unterschiedlichen Bereichen der Windschutzscheibe reflektiert werden, um das Bild im Sichtfeld eines auf dem Beifahrersitz sitzenden Beifahrers zu erzeugen,
die unterschiedlichen Bereiche der Windschutzscheibe einen Bereich von einem ersten Punkt (P1) neben dem einen Ende bis zu einem zweiten Punkt (P1) neben dem anderen Ende aufweisen, und
ein vertikaler Abstand zwischen der Abdeckung (1010) und der Bildschirmplatte (1200) so ausgebildet ist, dass er vom anderen Ende weiter als vom einen Ende ist.

4. Fahrzeugbildgebungsvorrichtung (1000) nach einem der Ansprüche 1 bis 3, die ferner einen zweiten Spiegel (1320) aufweist, der in einem Seitenbereich über der Bildschirmplatte (1200) angeordnet ist,
wobei die PGU (1100) in einem Seitenbereich unter der Bildschirmplatte (1200) angeordnet ist,
der zweite Spiegel (1320) in einem Abstand weiter von einem Ende der Bildschirmplatte (1200) entfernt als der Spiegel (1300) angeordnet ist, und
das von der PGU (1100) abgegebene Licht von dem Spiegel (1300) und von dem zweiten Spiegel (1320) reflektiert wird und erneut von der Bildschirmplatte (1200) reflektiert wird, um auf den spezifischen Bereich der Windschutzscheibe zu fallen, so dass das Bild in dem spezifischen Bereich angezeigt wird.

5. Fahrzeugbildgebungsvorrichtung (1000) nach einem der Ansprüche 2 und 4, wobei eine Oberfläche des Spiegels (1300) neben dem einen Ende der Bildschirmplatte (1200) auf das das in der PGU (1100) erzeugte Licht einfällt, in einer gekrümmten Form oder in einer ebenen Form ausgebildet ist,
der in der gekrümmten Form oder der ebenen Form ausgebildete Spiegel (1300) so angeordnet ist, dass er bezogen auf eine vertikale Achse um einen bestimmten Winkel zur Bildschirmplatte (1200) geneigt ist, und
die Bildschirmplatte (1200) als geneigte Struktur ausgebildet ist, bei der das eine Ende auf der vertikalen Achse an einem tieferen Punkt angeordnet ist als das andere Ende, oder das eine Ende der Bildschirmplatte (1200) auf der vertikalen Achse am gleichen Punkt wie das andere Ende ausgebildet ist.

6. Fahrzeugbildgebungsvorrichtung (1000) nach einem der Ansprüche 3 und 4, wobei eine Oberfläche des Spiegels (1300) neben dem anderen Ende der Bildschirmplatte (1200) auf die das von der PGU (1100) erzeugte Licht einfällt, in einer ebenen Form ausgebildet ist, der in einer ebenen Form ausgebildete Spiegel (1300) so angeordnet ist, dass er bezogen auf eine vertikale Achse in einem bestimmten Winkel zur Bildschirmplatte (1200) geneigt ist, und
die Bildschirmplatte (1200) in einer geneigten Struktur ausgebildet ist, bei der das eine Ende an einem höheren Punkt auf der vertikalen Achse als das andere Ende angeordnet ist.

7. Fahrzeugbildgebungsvorrichtung (1000) nach einem der Ansprüche 1 bis 6, wobei die Abdeckung (1010) aufweist:
einen undurchsichtigen Bereich (1010a), der in einem Bereich oder einem anderen Bereich ausgebildet ist, der einem Bereich entspricht, in dem die PGU (1100) und der Spiegel (1300) angeordnet sind; und
einen transparenten Bereich (1010b), der entsprechend einem Bereich ausgebildet ist, in dem die Bildschirmplatte (1200) angeordnet ist,
wobei der undurchsichtige Bereich (1010a) so ausgebildet ist, dass er den transparenten Bereich (1010b) umgibt, und
das durch Reflexion von der Bildschirmplatte (1200) erzeugte Bild durch den transparenten Bereich (1010b) der Abdeckung (1010) geht, um in dem spezifischen Bereich der Windschutzscheibe angezeigt zu werden, der sich auf der Beifahrersitzseite befindet.

8. Fahrzeugbildgebungsvorrichtung (1000) nach einem der Ansprüche 1 bis 7, wobei die Bildschirmplatte (1200) innerhalb der Instrumententafel so ausgebildet ist, dass sie eine erste Breite (W1) in einer axialen Richtung und eine erste Länge (L1) in einer anderen axialen Richtung aufweist,
das Verhältnis der ersten Breite (W1) zur ersten Länge (L1) auf ein erstes Verhältnis eingestellt ist,
das Verhältnis einer Breite (Wa) zu einer Länge (La) des auf der Windschutzscheibe angezeigten Bildes auf ein zweites Verhältnis eingestellt ist,
ein oberes Ende des auf der Windschutzscheibe auf der Beifahrersitzseite angezeigten Bildes tiefer als eine Mittellinie der Windschutzscheibe positioniert ist, und
das erste Verhältnis und das zweite Verhältnis mindestens 5:1 betragen.

9. Fahrzeugbildgebungsvorrichtung (1000) nach einem der Ansprüche 1 bis 8, wobei die Bildschirmplatte (1200) aufweist:
eine reflektierende Schicht (1210) mit Mustern, um das in der PGU (1100) erzeugte Licht zu reflektieren, wobei die Muster einen Querschnitt, der linear oder parabolisch ist, und eine Vorderseite aufweisen, die elliptisch ist; und
eine Streuschicht (1220), die auf einer Oberfläche der reflektierenden Schicht (1210) angeordnet und konfiguriert ist, das von der reflektierenden Schicht (1210) reflektierte Licht bezogen auf eine Richtung senkrecht zur Abdeckung (1010) in einem bestimmten Winkelbereich zu streuen, und
wobei die Muster so angeordnet sind, dass eine Länge der Muster der reflektierenden Schicht (1210) in einer axialen Richtung abnimmt, wenn der vertikale Abstand von der Bildschirmplatte (1200) zur Abdeckung (1010) abnimmt.

10. Fahrzeugbildgebungsvorrichtung (1000) nach Anspruch 9, wobei die reflektierende Schicht (1210) aufweist:
erste Muster (1211), die jeweils einen Querschnitt in linearer oder parabolischer Form mit einem ersten Neigungswinkel und eine in elliptischer Form ausgebildete Vorderseite aufweisen und konfiguriert sind, das Licht zu reflektieren; und
zweite Muster (1212), die zwischen den ersten Mustern (1211) angeordnet sind und einen zweiten Neigungswinkel aufweisen, der größer ist als der erste Neigungswinkel, und
wobei eine Länge der ersten Muster (1211) der reflektierenden Schicht (1210) in einem Seitenbereich, in dem die PGU (1110) angeordnet ist, länger ist als eine Länge der ersten Muster (1211) der reflektierenden Schicht (1210) in einem anderen Seitenbereich.

11. Fahrzeugbildgebungsvorrichtung (1000) nach einem der Ansprüche 1 bis 10, wobei die PGU (1100) aufweist:
mindestens eine Linse (1130), die konfiguriert ist, Licht einer spezifischen Farbe abzugeben;
einen dichroitischen Spiegel (1140), der konfiguriert ist, das von der Linse (1130) abgegebene Licht durchzulassen oder zu reflektieren;
einen inneren Spiegel (1145), der konfiguriert ist, das von der mindestens einen Linse (1130) abgegebene Licht zu reflektieren;
ein Anzeigefeld (1110);
ein Prisma (1120), das zwischen dem Anzeigefeld (1110) und dem inneren Spiegel (1145) angeordnet ist und konfiguriert ist, das vom inneren Spiegel (1145) und dem Anzeigefeld (1110) reflektierte Licht zu brechen und abzugeben; und
eine Projektionslinse (1150), die mehrere Linsen aufweist, die vom Prisma (1120) zu einer Seite beabstandet angeordnet sind.

12. Fahrzeugbildgebungsvorrichtung (1000) nach Anspruch 11, wobei die mindestens eine Linse (1130) eine erste Linse (1131), die rotes Licht abgibt, eine zweite Linse (1132), die grünes Licht abgibt, und eine dritte Linse (1133), die blaues Licht abgibt, aufweist, und der dichroitische Spiegel (1140) aufweist:
einen ersten dichroitischen Spiegel (1141), der konfiguriert ist, das rote Licht durchzulassen und das blaue Licht zu reflektieren; und
einen zweiten dichroitischen Spiegel (1142), der konfiguriert ist, das grüne Licht durchzulassen und das rote und das blaue Licht zu reflektieren, wobei die PGU (1100) ferner aufweist:
eine erste Relaislinse (1161), die zwischen dem zweiten dichroitischen Spiegel (1142) und dem inneren Spiegel (1145) angeordnet ist; und
eine zweite Relaislinse (1162), die zwischen dem inneren Spiegel (1145) und dem Prisma (1120) angeordnet ist,
das rote Licht, das blaue Licht und das grüne Licht, die vom zweiten dichroitischen Spiegel (1142) reflektiert oder durch diesen durchgelassen werden, durch die erste Relaislinse (1161) gehen und vom inneren Spiegel (1145) reflektiert werden, und
das rote Licht, das blaue Licht und das grüne Licht, die vom inneren Spiegel (1145) reflektiert werden, durch die zweite Relaislinse (1162), das Prisma (1120) und die Projektionslinse (1150) gehen.

13. Fahrzeugbildgebungsvorrichtung (1000) nach einem der Ansprüche 11 und 12, die ferner eine Antriebssteuereinheit (170) aufweist, die konfiguriert ist, die Bewegung der PGU (1100), des Spiegels (1300) und der Bildschirmplatte (1200) zu steuern,
wobei die Antriebssteuereinheit (170) betriebsfähig mit der PGU (1100) gekoppelt ist und einen ersten Motor (1171) so steuert, dass sich die Projektionslinse (1150) in der PGU (1100) in einer vertikalen Achsenrichtung bewegt und
eine Anzeigeposition des in dem spezifischen Bereich angezeigten Bildes in der anderen Achsenrichtung angepasst wird, wenn sich die Projektionslinse (1150) in der vertikalen Achsenrichtung bewegt.

14. Fahrzeugbildgebungsvorrichtung (1000) nach Anspruch 13, wobei die Antriebssteuereinheit (170) betriebsfähig mit dem Spiegel (1300) gekoppelt ist und einen zweiten Motor (1172) so steuert, dass der Spiegel (1300) in horizontaler Achsenrichtung geneigt wird und
die Anzeigeposition des in dem spezifischen Bereich angezeigten Bildes in der anderen Achsenrichtung angepasst wird, wenn der Spiegel (1300) in horizontaler Achsenrichtung geneigt wird,
wobei die Antriebssteuereinheit (170) betriebsfähig mit der Bildschirmplatte (1200) gekoppelt ist und einen dritten Motor (1173) so steuert, dass die Bildschirmplatte (1200) in einer Mittelachsenrichtung geneigt wird, und
die Anzeigeposition des in dem spezifischen Bereich angezeigten Bildes in der anderen axialen Richtung angepasst wird, wenn die Bildschirmplatte (1200) in der Mittelachsenrichtung geneigt wird.

15. Fahrzeugbildgebungsvorrichtung (100) nach Anspruch 9, wobei das durch die reflektierende Schicht (1210) der Bildschirmplatte (1200) reflektierte Licht innerhalb eines Bereichs des Sichtfelds eines auf dem Beifahrersitz sitzenden Benutzers und außerhalb des Sichtfelds eines auf dem Fahrersitz sitzenden Fahrers gebildet wird, so dass das Bild in dem spezifischen Bereich der Windschutzscheibe des Beifahrersitzes angezeigt wird,
wobei die reflektierende Schicht (1210) der Bildschirmplatte (1200) konfiguriert ist, Sonnenlicht zu reflektieren,
wobei das von der reflektierenden Schicht (1210) reflektierte Sonnenlicht, falls das Sonnenlicht unter einem ersten Winkel einfällt, unter diesem ersten Winkel in Bezug auf eine horizontale Achse einfällt und von einem ersten Punkt (Wp1) der Windschutzscheibe reflektiert wird, und
das von der reflektierenden Schicht (1210) reflektierte Sonnenlicht, falls das Sonnenlicht unter einem zweiten Winkel einfällt, der größer ist als der erste Winkel, unter dem zweiten Winkel in Bezug auf die horizontale Achse an einen zweiten Punkt (Wp2) der Windschutzscheibe einfällt und durch die Windschutzscheibe geht oder von dem zweiten Punkt (Wp2) reflektiert wird, um in einen Bereich zwischen dem Fahrersitz und dem Beifahrersitz weiterzugehen.

## Revendications

1. Dispositif d'imagerie pour véhicule (1000), comprenant :
un couvercle (1010) formant la face extérieure du tableau de bord d'un véhicule et disposé du côté du siège passager du véhicule ;
une unité de génération d'image, PGU (1100), disposée à l'intérieur du tableau de bord et prévue pour générer de la lumière vers le haut ou vers un côté ;
un miroir (1300) disposé entre la PGU (1100) et le couvercle (1010) et prévu pour réfléchir la lumière émise vers le haut ou vers le côté ; et
un panneau d'écran (1200) disposé entre la PGU (1100) et le couvercle (1010), et prévu pour réfléchir la lumière réfléchie par le miroir (1300) de sorte qu'une image formée par la lumière réfléchie traverse le couvercle (1010),
où l'image formée par la lumière réfléchie par le panneau d'écran (1200) est affichée dans une zone spécifique du pare-brise côté passager, de sorte que la largeur (Wa) de l'image dans une direction axiale est supérieure à la longueur (La) dans une autre direction axiale.

2. Dispositif d'imagerie pour véhicule (1000) suivant la revendication 1, où la PGU (1100) est espacée d'une première extrémité du panneau d'écran (1200), et où ladite première extrémité est plus proche du siège passager qu'une autre extrémité du panneau d'écran (1200),
la lumière réfléchie par le miroir (1300) et la lumière réfléchie par le panneau d'écran (1200) sont réfléchies suivant des angles de réflexion différents dans différentes zones du pare-brise, afin de former l'image dans le champ de vision d'un passager assis sur le siège passager,
les différentes zones du pare-brise comprennent une zone s'étendant d'un premier point (P1) adjacent à la première extrémité vers un deuxième point (P2) adjacent à l'autre extrémité, et
la distance verticale entre le couvercle (1010) et le panneau d'écran (1200) est prévue plus courte à l'autre extrémité qu'à la première extrémité.

3. Dispositif d'imagerie pour véhicule (1000) suivant la revendication 1, où la PGU (1100) est espacée d'une autre extrémité du panneau d'écran (1200), et où ladite autre extrémité est plus éloignée du siège passager qu'une première extrémité du panneau d'écran (1200), la lumière réfléchie par le miroir (1300) et la lumière réfléchie par le panneau d'écran (1200) sont réfléchies suivant des angles de réflexion différents dans différentes zones du pare-brise, afin de former l'image dans le champ de vision d'un passager assis sur le siège passager,
les différentes zones du pare-brise comprennent une zone s'étendent d'un premier point (P1) adjacent à la première extrémité vers un deuxième point (P1) adjacent à l'autre extrémité, et
la distance verticale entre le couvercle (1010) et le panneau d'écran (1200) est prévue plus grande à partir de l'autre extrémité qu'à partir de la première extrémité.

4. Dispositif d'imagerie pour véhicule (1000) suivant l'une des revendications 1 à 3, comprenant en outre un deuxième miroir (1320) disposé dans une zone latérale au-dessus du panneau d'écran (1200),
où la PGU (1100) est disposée dans une zone latérale située en dessous du panneau d'écran (1200),
le deuxième miroir (1320) est plus éloigné d'une extrémité du panneau d'écran (1200) que le miroir (1300), et
la lumière émise par la PGU (1100) est réfléchie par le miroir (1300) et le deuxième miroir (1320), puis réfléchie à nouveau par le panneau d'écran (1200) pour être incidente à la zone spécifique du pare-brise, de sorte que l'image est affichée dans la zone spécifique.

5. Dispositif d'imagerie pour véhicule (1000) suivant la revendication 2 ou la revendication 4, où une première surface du miroir (1300) adjacente à la première extrémité du panneau d'écran (1200) sur laquelle la lumière générée dans la PGU (1100) est incidente, est formée de manière incurvée ou plane,
le miroir (1300) de forme incurvée ou plane est disposé de manière à être incliné d'un certain angle vers le panneau d'écran (1200) par rapport à un axe vertical, et
le panneau d'écran (1200) présente une structure inclinée où la première extrémité est disposée à un point plus bas sur l'axe vertical que l'autre extrémité, ou bien où la première extrémité du panneau d'écran (1200) est située au même point sur l'axe vertical que l'autre extrémité.

6. Dispositif d'imagerie pour véhicule (1000) suivant la revendication 3 ou la revendication 4, où une surface du miroir (1300) adjacente à l'autre extrémité du panneau d'écran (1200) sur laquelle la lumière générée dans la PGU (1100) est formée de manière plane, le miroir (1300) de forme plane est disposé de manière à être incliné d'un certain angle vers le panneau d'écran (1200) par rapport à un axe vertical, et
le panneau d'écran (1200) est réalisé suivant une structure inclinée dans laquelle la première extrémité est disposée à un point plus haut sur l'axe vertical que l'autre extrémité.

7. Dispositif d'imagerie pour véhicule (1000) suivant l'une des revendications 1 à 6, où le couvercle (1010) comprend :
une zone opaque (1010a) formée dans une première zone ou une autre zone correspondant à la zone où sont disposés la PGU (1100) et le miroir (1300) ; et
une zone transparente (1010b) formée en correspondance avec la zone où est disposé le panneau d'écran (1200),
la zone opaque (1010a) est formée par réflexion de manière à entourer la zone transparente (1010b), et
l'image formée par réflexion à partir du panneau d'écran (1200) traverse la zone transparente (1010b) du couvercle (1010) pour être affichée dans la zone spécifique du pare-brise située du côté du siège passager.

8. Dispositif d'affichage pour véhicule (1000) suivant l'une des revendications 1 à 7, où le panneau d'écran (1200) est formé à l'intérieur du tableau de bord de manière à présenter une première largeur (W1) dans une direction axiale et une première longueur (L1) dans une autre direction axiale,
le rapport entre la première largeur (W1) et la première longueur (L1) est défini comme premier rapport,
le rapport entre une largeur (Wa) et une longueur (La) de l'image affichée sur le pare-brise est défini comme deuxième rapport,
le sommet de l'image affichée sur le pare-brise, du côté du siège passager, est situé en dessous de la ligne médiane du pare-brise, et
le premier rapport et le deuxième rapport sont égaux ou supérieurs à 5:1.

9. Dispositif d'imagerie pour véhicule (1000) suivant l'une des revendications 1 à 8, où le panneau d'écran (1200) comprend :
une couche réfléchissante (1210) comportant des motifs destinés à réfléchir la lumière générée dans la PGU (1100), lesdits motifs ayant une section transversale linéaire ou parabolique et une surface avant elliptique ; et
une couche de diffusion (1220) disposée sur une surface de la couche réfléchissante (1210) et prévue pour diffuser la lumière réfléchie par la couche réfléchissante (1210) dans une certaine plage angulaire sur la base d'une direction perpendiculaire au couvercle (1010), et
où les motifs sont disposés de sorte qu'une longueur dans une direction axiale des motifs de la couche réfléchissante (1210) diminue à mesure que diminue la distance verticale entre le panneau d'écran (1200) et le couvercle (1010).

10. Dispositif d'imagerie pour véhicule (1000) suivant la revendication 9, où la couche réfléchissante (1210) comprend :
des premiers motifs (1211) présentant chacun une section transversale de forme linéaire ou parabolique avec un premier angle d'inclinaison et une surface avant de forme elliptique, et prévus pour réfléchir la lumière ; et
des deuxièmes motifs (1212) disposés entre les premiers motifs (1211) et présentant un deuxième angle d'inclinaison supérieur au premier angle d'inclinaison, et
où la longueur des premiers motifs (1211) de la couche réfléchissante (1210) dans une zone latérale où est disposée la PGU (1110) est supérieure à la longueur des premiers motifs (1211) de la couche réfléchissante (1210) dans une autre zone latérale.

11. Dispositif d'imagerie pour véhicule (1000) suivant l'une des revendications 1 à 10, où la PGU (1100) comprend :
au moins une lentille (1130) prévue pour émettre de la lumière d'une couleur spécifique ; un miroir dichroïque (1140) prévu pour transmettre ou réfléchir la lumière émise par la lentille (1130) ;
un miroir intérieur (1145) prévu pour réfléchir la lumière émise par ladite au moins une lentille (1130) ;
un panneau d'écran (1110) ;
un prisme (1120) disposé entre le panneau d'écran (1110) et le miroir intérieur (1145) et prévu pour réfracter et émettre la lumière réfléchie par le miroir intérieur (1145) et le panneau d'écran (1110) ; et
une lentille de projection (1150) comprenant une pluralité de lentilles espacées du prisme (1120) d'un côté.

12. Dispositif d'imagerie pour véhicule (1000) suivant la revendication 11, où ladite au moins une lentille (1130) comprend une première lentille (1131) émettant une lumière rouge, une deuxième lentille (1132) émettant une lumière verte, et une troisième lentille (1133) émettant une lumière bleue, et
où le miroir dichroïque (1140) comprend :
un premier miroir dichroïque (1141) prévu pour transmettre la lumière rouge et réfléchir la lumière bleue ; et
un deuxième miroir dichroïque (1142) prévu pour transmettre la lumière verte et réfléchir la lumière rouge et la lumière bleue, où la PGU (1100) comprend en outre :
une première lentille de relais (1161) disposée entre le deuxième miroir dichroïque (1142) et le miroir intérieur (1145) ; et
une deuxième lentille de relais (1162) disposée entre le miroir intérieur (1145) et le prisme (1120),
où la lumière rouge, la lumière bleue et la lumière verte réfléchies par le deuxième miroir dichroïque ou transmises à travers celui-ci (1142) traversent la première lentille de relais (1161) et sont réfléchies par le miroir intérieur (1145), et
où la lumière rouge, la lumière bleue et la lumière verte réfléchies par le miroir intérieur (1145) traversent la deuxième lentille de relais (1162), le prisme (1120) et la lentille de projection (1150).

13. Dispositif d'imagerie pour véhicule (1000) suivant la revendication 11 ou la revendication 12, comprenant en outre une unité de commande d'entraînement (170) prévue pour commander le déplacement de la PGU (1100), du miroir (1300) et du panneau d'écran (1200),
où l'unité de commande d'entraînement (170) est fonctionnellement reliée à la PGU (1100) et commande un premier moteur (1171) de sorte que la lentille de projection (1150) située dans la PGU (1100) se déplace dans une direction d'axe vertical, et
où une position d'affichage de l'image affichée dans la zone spécifique est ajustée dans l'autre direction axiale à mesure que la lentille de projection (1150) se déplace dans la direction d'axe vertical.

14. Dispositif d'imagerie pour véhicule (1000) suivant la revendication 13, où l'unité de commande d'entraînement (170) est fonctionnellement reliée au miroir (1300) et commande un deuxième moteur (1172) de manière à incliner le miroir (1300) dans une direction d'axe horizontal, et
où la position d'affichage de l'image affichée dans la zone spécifique est ajustée dans l'autre direction axiale à mesure que le miroir (1300) est incliné dans la direction d'axe horizontal,
où l'unité de commande d'entraînement (170) est fonctionnellement reliée au panneau d'écran (1200) et commande un troisième moteur (1173) de manière à incliner le panneau d'écran (1200) dans la direction d'axe central, et
où la position d'affichage de l'image affichée dans la zone spécifique est ajustée dans l'autre direction axiale à mesure que le panneau d'écran (1200) est incliné dans la direction d'axe central.

15. Dispositif d'imagerie pour véhicule (100) suivant la revendication 9, où la lumière réfléchie par la couche réfléchissante (1210) du panneau d'écran (1200) est formée à l'intérieur d'une zone du champ de vision d'un passager assis sur un siège passager et à l'extérieur du champ de vision d'un conducteur assis sur un siège conducteur, de sorte que l'image est affichée dans la zone spécifique du pare-brise du côté passager,
où la couche réfléchissante (1210) du panneau d'écran (1200) est prévue pour réfléchir le rayonnement solaire,
le rayonnement solaire réfléchi par la couche réfléchissante (1210), si le rayonnement solaire est incident suivant un premier angle, est incident suivant ce premier angle par rapport à un axe horizontal et réfléchi à partir d'un premier point (Wp1) du pare-brise, et le rayonnement solaire réfléchi par la couche réfléchissante (1210), si le rayonnement solaire est incident suivant un deuxième angle supérieur au premier angle, est incident suivant ce deuxième angle par rapport à l'axe horizontal sur un deuxième point (Wp2) du pare-brise, et traverse le pare-brise ou est réfléchi à partir du deuxième point (Wp2) de manière à se propager dans une zone située entre le siège conducteur et le siège passager.
